(19)

Europäisches
Patentamt
European
Patent Office
Office européen
des brevets

(11) **EP 4 664 420 A1**

(12) **EUROPEAN PATENT APPLICATION**
published in accordance with Art. 153(4) EPC

(43) Date of publication:
 **17.12.2025 Bulletin 2025/51**

(21) Application number: **24763166.6**

(22) Date of filing: **28.02.2024**

(51) International Patent Classification (IPC):
 *G06V 10/82* (2022.01)

(86) International application number:
 **PCT/CN2024/078888**

(87) International publication number:
 **WO 2024/179485 (06.09.2024 Gazette 2024/36)**

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **GE KH MA MD TN**

(30) Priority: **28.02.2023 CN 202310230254**

(71) Applicant: **Huawei Technologies Co., Ltd.
 Shenzhen, Guangdong 518129 (CN)**

(72) Inventors:
 • **HAN, Jianhua
 Shenzhen, Guangdong 518129 (CN)**
 • **XU, Hang
 Shenzhen, Guangdong 518129 (CN)**
 • **YAO, Lewei
 Shenzhen, Guangdong 518129 (CN)**
 • **ZHANG, Wei
 Shenzhen, Guangdong 518129 (CN)**

(74) Representative: **Isarpatent
 Patent- und Rechtsanwälte
 Barth Hassa Peckmann & Partner mbB
 Friedrichstraße 31
 80801 München (DE)**

(54) **IMAGE PROCESSING METHOD AND RELATED DEVICE THEREOF**

(57) An image processing method and a related device thereof are provided, to effectively reduce image processing costs, and reduce a calculation amount of image processing, thereby improving image processing efficiency. The method in this application includes: obtaining an image; encoding the image to obtain an encoding result of the image; processing the encoding result to obtain a first processing result of the image, where the first processing result is used to determine locations of M objects in the image, and M≥1; and processing the encoding result and the first processing result to obtain a second processing result of the image, where the second processing result is used to determine categories of the M objects.

FIG. 5

Obtain an image — 501

Encode the image to obtain an encoding result of the image — 502

Process the encoding result to obtain a first processing result of the image, where the first processing result is used to determine locations of M objects in the image, and M≥1 — 503

Process the encoding result and the first processing result to obtain a second processing result of the image, where the second processing result is used to determine categories of the M objects — 504

## Description

This application claims priority to Chinese Patent Application No. 202310230254.1, filed with the China National Intellectual Property Administration on February 28, 2023 and entitled "IMAGE PROCESSING METHOD AND RELATED DEVICE THEREOF", which is incorporated herein by reference in its entirety.

## TECHNICAL FIELD

Embodiments of this application relate to the field of artificial intelligence (artificial intelligence, AI) technologies, and in particular, to an image processing method and a related device thereof.

## BACKGROUND

For visual tasks like target detection, a neural network model is mainly used to process an image, to find all objects (objects) of interest in the image, and determine categories and locations of these objects. This is one of core problems in the computer vision field.

In a related technology, when target detection needs to be performed on an image, the image and a plurality of texts of the image (the texts are used to describe categories of a plurality of objects in the image) may be input into a neural network model. In this case, the model encodes the image to obtain an encoding result of the image, and encodes the texts to obtain an encoding result of the texts. Then, the model may process the encoding result of the image and the encoding result of the texts, to obtain and output a final processing result of the image. In this case, the final processing result of the image may be used to determine locations and the categories of the plurality of objects in the image.

In the foregoing process, because the texts of the image are usually specified manually or extracted by using an additional technology, image processing costs are high. In addition, the neural network model needs to process the image and the texts, and a large amount of information needs to be processed. As a result, a calculation amount of image processing is large, and efficiency is low.

## SUMMARY

Embodiments of this application provide an image processing method and a related device thereof, to effectively reduce image processing costs, and reduce a calculation amount of image processing, thereby improving image processing efficiency.

A first aspect of embodiments of this application provides an image processing method. The method is implemented by using a first model. The method includes:

When target detection needs to be performed on an image, the image may be first obtained. It should be noted that content presented in the image usually includes a plurality of objects. After the image is obtained, the image may be input into a first model, so that the first model performs target detection-based processing on the image, to determine locations and categories of the plurality of objects in the image.

After the image is received, the first model may encode the image, to obtain the encoding result of the image.

After the encoding result of the image is obtained, the first model may process the encoding result of the image to obtain the first processing result of the image. The first processing result of the image usually includes location information of the M objects in the image. Therefore, after the first processing result of the image is output by the first model, the locations of the M objects in the image may be determined by using the first processing result of the image. It should be noted that the M objects may be understood as M objects in the image, or may be understood as M bounding boxes in the image.

After the first processing result of the image is obtained, the first model may process the encoding result of the image and the first processing result of the image to obtain the second processing result of the image. The second processing result of the image usually includes category information of the M objects in the image. Therefore, after the second processing result of the image is output by the first model, the categories of the M objects in the image may be determined by using the second processing result of the image. In this way, the locations and the categories of the M objects in the image are successfully obtained, that is, target detection for the image is completed.

**It** can be learned from the foregoing method that when target detection needs to be performed on an image, the image may be input into the first model. In this case, the first model may first encode the image to obtain an encoding result of the image. Then, the first model may process the encoding result of the image to obtain a first processing result of the image. Then, the first model may process the encoding result of the image and the first processing result of the image to obtain a second processing result of the image. After the first processing result and the second processing result that are output by the first model are obtained, locations of M objects in the image may be determined by using the first processing result, and categories of the M objects in the image may be determined by using the second processing result. In this way, target detection for the image is completed. In the foregoing process, an input of the first model is only the image, and no text related to the image needs to be prepared, so that image processing costs can be effectively reduced. In addition, the first model needs only to perform a series of processing on the image to complete target detection for the image, and an amount of information that needs to be processed is small. Therefore, a calculation amount of image processing can be reduced, thereby improving image processing efficiency.

In a possible implementation, encoding the image to obtain the encoding result of the image includes: encoding the image to obtain first features of the M objects in the image, where the first features of the M objects are used as the encoding result of the image. In the foregoing implementation, after the image is received, the first model may encode the image, to obtain the first features of the M objects in the image (the first features of the M objects may also be referred to as initial region features of the M objects). In this case, the first model may use the first features of the M objects as the encoding result of the image.

In a possible implementation, processing the encoding result to obtain the first processing result of the image includes: performing multilayer perceptron-based processing on the first features of the M objects to obtain second features of the M objects, where the second features of the M objects are used as the first processing result of the image. In the foregoing implementation, after the first features of the M objects are obtained, the first model may perform a series of multilayer perceptron-based processing on the first features of the M objects, to obtain the second features of the M objects (the second features of the M objects may also be referred to as location information of the M objects). In this case, the first model may use the second features of the M objects as the first processing result of the image, and output the first processing result.

In a possible implementation, the first processing result includes coordinates of boundary points of the M objects in the image, or the first processing result includes sizes of the M objects and coordinates of central points of the M objects in the image. In the foregoing implementation, for any one of the M objects, a second feature of the object is location information of the object, and the location information of the object may be presented in a plurality of manners: (1) The location information of the object may be coordinates of a boundary point of the object in the image. For example, when the object is a bounding box, coordinates of a boundary point of the bounding box may be coordinates of four vertices of the bounding box. (2) The location information of the object may be a size of the object and coordinates of a central point of the object in the image. For example, when the object is a bounding box, a size of the bounding box may mean a height and a width of the bounding box.

In a possible implementation, processing the encoding result and the first processing result to obtain the second processing result of the image includes: performing deformable convolution on the second features of the M objects to obtain third features of the M objects; fusing the first features of the M objects and the third features of the M objects to obtain fourth features of the M objects; and processing the fourth features of the M objects to obtain fifth features of the M objects, where the fifth features of the M objects are used as the second processing result of the image, and the processing on the fourth features includes at least one of the following: processing based on a self attention mechanism, processing based on a cross attention mechanism, and full connection. In the foregoing implementation, after the second features of the M objects are obtained, the first model may perform deformable convolution on the second features of the M objects, to obtain the third features of the M objects (the third features of the M objects may also be referred to as features of the location information of the M objects). After the first features of the M objects and the third features of the M objects are obtained, the first model may fuse the first features of the M objects and the third features of the M objects, to obtain the fourth features of the M objects (the fourth features of the M objects may also be referred to as new region features of the M objects). After the fourth features of the M objects are obtained, the first model may perform a series of processing (for example, processing based on a self attention mechanism, processing based on a cross attention mechanism, and full connection) on the fourth features of the M objects to obtain the fifth features of the M objects. In this case, the first model may use the fifth features of the M objects as the second processing result of the image, and output the second processing result. It should be noted that, for any one of the M objects, a fifth feature of the object is category information of the object, and includes probabilities that the object belongs to various categories.

A second aspect of embodiments of this application provides a model training method. The method includes: obtaining an image; inputting the image into a first to-be-trained model to obtain a first processing result of the image and a second processing result of the image, where the first to-be-trained model is configured to: encode the image to obtain an encoding result of the image; process the encoding result to obtain the first processing result of the image, where the first processing result is used to determine locations of M objects in the image, and M≥1; and process the encoding result and the first processing result to obtain the second processing result of the image, where the second processing result is used to determine categories of the M objects; obtaining a target loss based on the first processing result and the second processing result; and training the first to-be-trained model based on the target loss, to obtain a first model.

The first model obtained through training in the foregoing method has a specific image processing capability (target detection capability). Specifically, when target detection needs to be performed on an image, the image may be input into the first model. In this case, the first model may first encode the image to obtain an encoding result of the image. Then, the first model may process the encoding result of the image to obtain a first processing result of the image. Then, the first model may process the encoding result of the image and the first processing result of the image to obtain a second processing result of the image. After the first processing result and the second processing result that are output by the first model are obtained, locations of M objects in the image may be determined by using the first processing result, and categories of the M objects in the image may be determined by using the second processing result. In this way, target detection for the image is completed. In the foregoing process, an input of the first model is only the image, and no text related to the image needs to be prepared, so that image processing costs can be effectively reduced. In addition, the first model needs only to perform a series of processing on the image to complete target detection for the image, and an amount of information that needs to be processed is small. Therefore, a calculation amount of image processing can be reduced, thereby improving image processing efficiency.

In a possible implementation, the first to-be-trained model is configured to encode the image to obtain first features of the M objects in the image, where the first features of the M objects are used as the encoding result of the image.

In a possible implementation, the first to-be-trained model is configured to perform multilayer perceptron-based processing on the first features of the M objects to obtain second features of the M objects, where the second features of the M objects are used as the first processing result of the image.

In a possible implementation, the first processing result includes coordinates of boundary points of the M objects in the image, or the first processing result includes sizes of the M objects and coordinates of central points of the M objects in the image.

In a possible implementation, the first to-be-trained model is configured to: perform deformable convolution on the second features of the M objects to obtain third features of the M objects; fuse the first features of the M objects and the third features of the M objects to obtain fourth features of the M objects; and process the fourth features of the M objects to obtain fifth features of the M objects, where the fifth features of the M objects are used as the second processing result of the image, and the processing on the fourth features includes at least one of the following: processing based on a self attention mechanism, processing based on a cross attention mechanism, and full connection.

In a possible implementation, the method further includes: obtaining N texts, where the N texts are used to describe N categories that are different from each other, and $M \geq N \geq 1$; encoding the N texts by using a second to-be-trained model, to obtain features of the N texts; and performing matching on the features of the N texts and the fourth features of the M objects by using a third to-be-trained model, to obtain degrees of matching between the N texts and the M objects, where the degrees of matching between the N texts and the M objects are used as a third processing result of the image. Obtaining the target loss based on the first processing result and the second processing result includes: obtaining the target loss based on the first processing result, the second processing result, and the third processing result.

In a possible implementation, the method further includes: aggregating the degrees of matching between the N texts and the M objects to obtain degrees of matching between the N texts and the image, where the degrees of matching between the N texts and the image are used as a fourth processing result of the image. Obtaining the target loss based on the first processing result and the second processing result includes: obtaining the target loss based on the first processing result, the second processing result, and the fourth processing result.

In a possible implementation, the method further includes: training the second to-be-trained model and the third to-be-trained model based on the target loss, to obtain a second model and a third model.

A third aspect of embodiments of this application provides an image processing apparatus. The apparatus includes a first model, and the apparatus includes: an obtaining module, configured to obtain an image; an encoding module, configured to encode the image to obtain an encoding result of the image; a first processing module, configured to process the encoding result to obtain a first processing result of the image, where the first processing result is used to determine locations of M objects in the image, and $M \geq 1$; and a second processing module, configured to process the encoding result and the first processing result to obtain a second processing result of the image, where the second processing result is used to determine categories of the M objects.

It can be learned from the foregoing apparatus that when target detection needs to be performed on an image, the image may be input into the first model. In this case, the first model may first encode the image to obtain an encoding result of the image. Then, the first model may process the encoding result of the image to obtain a first processing result of the image. Then, the first model may process the encoding result of the image and the first processing result of the image to obtain a second processing result of the image. After the first processing result and the second processing result that are output by the first model are obtained, locations of M objects in the image may be determined by using the first processing result, and categories of the M objects in the image may be determined by using the second processing result. In this way, target detection for the image is completed. In the foregoing process, an input of the first model is only the image, and no text related to the image needs to be prepared, so that image processing costs can be effectively reduced. In addition, the first model needs only to perform a series of processing on the image to complete target detection for the image, and an amount of information that needs to be processed is small. Therefore, a calculation amount of image processing can be reduced, thereby improving image processing efficiency.

In a possible implementation, the encoding module is configured to encode the image to obtain first features of the M objects in the image, where the first features of the M objects are used as the encoding result of the image.

In a possible implementation, the first processing module is configured to perform multilayer perceptron-based processing on the first features of the M objects to obtain second features of the M objects, where the second features of the M objects are used as the first processing result of the image.

In a possible implementation, the first processing result includes coordinates of boundary points of the M objects in the image, or the first processing result includes sizes of the M objects and coordinates of central points of the M objects in the image.

In a possible implementation, the second processing module is configured to: perform deformable convolution on the second features of the M objects to obtain third features of the M objects; fuse the first features of the M objects and the third features of the M objects to obtain fourth features of the M objects; and process the fourth features of the M objects to obtain fifth features of the M objects, where the fifth features of the M objects are used as the second processing result of the image, and the processing on the fourth features includes at least one of the following: processing based on a self attention mechanism, processing based on a cross attention mechanism, and full connection.

A fourth aspect of embodiments of this application provides a model training apparatus. The apparatus includes: a first obtaining module, configured to obtain an image; a first processing module, configured to input the image into a first to-be-trained model to obtain a first processing result of the image and a second processing result of the image, where the first to-be-trained model is configured to: encode the image to obtain an encoding result of the image; process the encoding result to obtain the first processing result of the image, where the first processing result is used to determine locations of M objects in the image, and M≥1; and process the encoding result and the first processing result to obtain the second processing result of the image, where the second processing result is used to determine categories of the M objects; a second obtaining module, configured to obtain a target loss based on the first processing result and the second processing result; and a first training module, configured to train the first to-be-trained model based on the target loss, to obtain a first model.

The first model obtained through training in this embodiment of this application has a specific image processing capability (target detection capability). Specifically, when target detection needs to be performed on an image, the image may be input into the first model. In this case, the first model may first encode the image to obtain an encoding result of the image. Then, the first model may process the encoding result of the image to obtain a first processing result of the image. Then, the first model may process the encoding result of the image and the first processing result of the image to obtain a second processing result of the image. After the first processing result and the second processing result that are output by the first model are obtained, locations of M objects in the image may be determined by using the first processing result, and categories of the M objects in the image may be determined by using the second processing result. In this way, target detection for the image is completed. In the foregoing process, an input of the first model is only the image, and no text related to the image needs to be prepared, so that image processing costs can be effectively reduced. In addition, the first model needs only to perform a series of processing on the image to complete target detection for the image, and an amount of information that needs to be processed is small. Therefore, a calculation amount of image processing can be reduced, thereby improving image processing efficiency.

In a possible implementation, the first to-be-trained model is configured to encode the image to obtain first features of the M objects in the image, where the first features of the M objects are used as the encoding result of the image.

In a possible implementation, the first to-be-trained model is configured to perform multilayer perceptron-based processing on the first features of the M objects to obtain second features of the M objects, where the second features of the M objects are used as the first processing result of the image.

In a possible implementation, the first processing result includes coordinates of boundary points of the M objects in the image, or the first processing result includes sizes of the M objects and coordinates of central points of the M objects in the image.

In a possible implementation, the first to-be-trained model is configured to: perform deformable convolution on the second features of the M objects to obtain third features of the M objects; fuse the first features of the M objects and the third features of the M objects to obtain fourth features of the M objects; and process the fourth features of the M objects to obtain fifth features of the M objects, where the fifth features of the M objects are used as the second processing result of the image, and the processing on the fourth features includes at least one of the following: processing based on a self attention mechanism, processing based on a cross attention mechanism, and full connection.

In a possible implementation, the apparatus further includes: a third obtaining module, configured to obtain N texts, where the N texts are used to describe N categories that are different from each other, and M≥N≥1; a second processing module, configured to encode the N texts by using a second to-be-trained model, to obtain features of the N texts; and a third processing module, configured to perform matching on the features of the N texts and the fourth features of the M objects by using a third to-be-trained model, to obtain degrees of matching between the N texts and the M objects, where the degrees of matching between the N texts and the M objects are used as a third processing result of the image. The second obtaining module is configured to obtain the target loss based on the first processing result, the second processing result, and the third processing result.

In a possible implementation, the apparatus further includes: a fourth processing module, configured to aggregate the degrees of matching between the N texts and the M objects to obtain degrees of matching between the N texts and the image, where the degrees of matching between the N texts and the image are used as a fourth processing result of the image. The second obtaining module is configured to obtain the target loss based on the first processing result, the second processing result, and the fourth processing result.

In a possible implementation, the apparatus further includes a second training module, configured to train the second to-be-trained model and the third to-be-trained model based on the target loss, to obtain a second model and a third model.

A fifth aspect of embodiments of this application provides an image processing apparatus. The apparatus includes a memory and a processor. The memory stores code, the processor is configured to execute the code, and when the code is executed, the image processing apparatus performs the method according to any one of the first aspect or the possible implementations of the first aspect.

A sixth aspect of embodiments of this application provides a model training apparatus. The apparatus includes a memory and a processor. The memory stores code, the processor is configured to execute the code, and when the code is executed, the model training apparatus performs the method according to any one of the second aspect or the possible implementations of the second aspect.

A seventh aspect of embodiments of this application provides a circuit system. The circuit system includes a processing circuit. The processing circuit is configured to perform the method according to any one of the first aspect, the possible implementations of the first aspect, the second aspect, or the possible implementations of the second aspect.

An eighth aspect of embodiments of this application provides a chip system. The chip system includes a processor, configured to invoke a computer program or computer instructions stored in a memory, so that the processor performs the method according to any one of the first aspect, the possible implementations of the first aspect, the second aspect, or the possible implementations of the second aspect.

In a possible implementation, the processor is coupled to the memory through an interface.

In a possible implementation, the chip system further includes the memory. The memory stores the computer program or the computer instructions.

A ninth aspect of embodiments of this application provides a computer storage medium. The computer storage medium stores a computer program. When the program is executed by a computer, the computer is enabled to implement the method according to any one of the first aspect, the possible implementations of the first aspect, the second aspect, or the possible implementations of the second aspect.

A tenth aspect of embodiments of this application provides a computer program product. The computer program product stores instructions. When the instructions are executed by a computer, the computer is enabled to implement the method according to any one of the first aspect, the possible implementations of the first aspect, the second aspect, or the possible implementations of the second aspect.

In this embodiment of this application, when target detection needs to be performed on an image, the image may be input into the first model. In this case, the first model may first encode the image to obtain an encoding result of the image. Then, the first model may process the encoding result of the image to obtain a first processing result of the image. Then, the first model may process the encoding result of the image and the first processing result of the image to obtain a second processing result of the image. After the first processing result and the second processing result that are output by the first model are obtained, locations of M objects in the image may be determined by using the first processing result, and categories of the M objects in the image may be determined by using the second processing result. In this way, target detection for the image is completed. In the foregoing process, an input of the first model is only the image, and no text related to the image needs to be prepared, so that image processing costs can be effectively reduced. In addition, the first model needs only to perform a series of processing on the image to complete target detection for the image, and an amount of information that needs to be processed is small. Therefore, a calculation amount of image processing can be reduced, thereby improving image processing efficiency.

**BRIEF DESCRIPTION OF DRAWINGS**

FIG. 1 is a diagram of a structure of an artificial intelligence body framework;
FIG. 2a is a diagram of a structure of an image processing system according to an embodiment of this application;
FIG. 2b is another diagram of a structure of an image processing system according to an embodiment of this application;
FIG. 2c is a diagram of an image processing related device according to an embodiment of this application;
FIG. 3 is a diagram of an architecture of a system 100 according to an embodiment of this application;
FIG. 4 is a diagram of a structure of a first model according to an embodiment of this application;
FIG. 5 is a schematic flowchart of an image processing method according to an embodiment of this application;

FIG. 6 is another diagram of a structure of a first model according to an embodiment of this application;
FIG. 7 is another diagram of a structure of a first model according to an embodiment of this application;
FIG. 8 is a diagram of a structure of a joint training framework according to an embodiment of this application;
FIG. 9 is a diagram of a model training method according to an embodiment of this application;
FIG. 10 is another diagram of a structure of a joint training framework according to an embodiment of this application;
FIG. 11 is a diagram of a structure of an image processing apparatus according to an embodiment of this application;
FIG. 12 is a diagram of a structure of a model training apparatus according to an embodiment of this application;
FIG. 13 is a diagram of a structure of an execution device according to an embodiment of this application;
FIG. 14 is a diagram of a structure of a training device according to an embodiment of this application; and
FIG. 15 is a diagram of a structure of a chip according to an embodiment of this application.

## DESCRIPTION OF EMBODIMENTS

Embodiments of this application provide an image processing method and a related device thereof, to effectively reduce image processing costs, and reduce a calculation amount of image processing, thereby improving image processing efficiency.

In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances. This is merely a discrimination manner that is used when objects having a same attribute are described in embodiments of this application. In addition, the terms "include", "have", and any variants thereof are intended to cover non-exclusive inclusion, so that a process, method, system, product, or device including a series of units is not necessarily limited to those units, but may include other units that are not clearly listed or are inherent to the process, method, product, or device.

With rapid development of computer technologies, neural network models in AI technologies are used in more fields to complete various visual tasks. For visual tasks like target detection, a neural network model is mainly used to process an image, to find all objects (objects) of interest in the image, and determine categories and locations of these objects. This is one of core problems in the computer vision field.

In a related technology, when target detection needs to be performed on an image, the image and a plurality of texts of the image may be first obtained. The texts are used to describe categories of a plurality of objects in the image. For example, it is assumed that there is an image, and content presented on the image is that a person lies on the grass, flowers, grass, and trees are planted on the grass, and there are butterflies on the flowers. Therefore, a plurality of texts of the image are "people", "ground", "flower", "grass", "tree", and "butterfly". Then, the image and the plurality of texts of the image are input into a neural network model. In this case, the model encodes the image to obtain an encoding result of the image, and encodes the texts to obtain an encoding result of the texts. Then, the model may process the encoding result of the image and the encoding result of the texts, to obtain and output a final processing result of the image. In this case, the final processing result of the image may be used to determine locations and the categories of the plurality of objects in the image.

In the foregoing process, because the texts of the image are usually specified manually or extracted by using an additional technology, image processing costs are high. In addition, the neural network model needs to process the image and the texts, and a large amount of information needs to be processed. As a result, a calculation amount of image processing is large, and efficiency is low.

To resolve the foregoing problem, embodiments of this application provide an image processing method. The method may be implemented with reference to an artificial intelligence (artificial intelligence, AI) technology. The AI technology is a technical discipline that simulates, extends, and expands human intelligence by using a digital computer or a machine controlled by a digital computer. The AI technology obtains an optimal result by perceiving an environment, obtaining knowledge, and using the knowledge. In other words, the artificial intelligence technology is a branch in computer science, and aims to understand the essence of intelligence and produce a new intelligent machine that can react in a manner similar to human intelligence. Using artificial intelligence to process data is a common application manner of artificial intelligence.

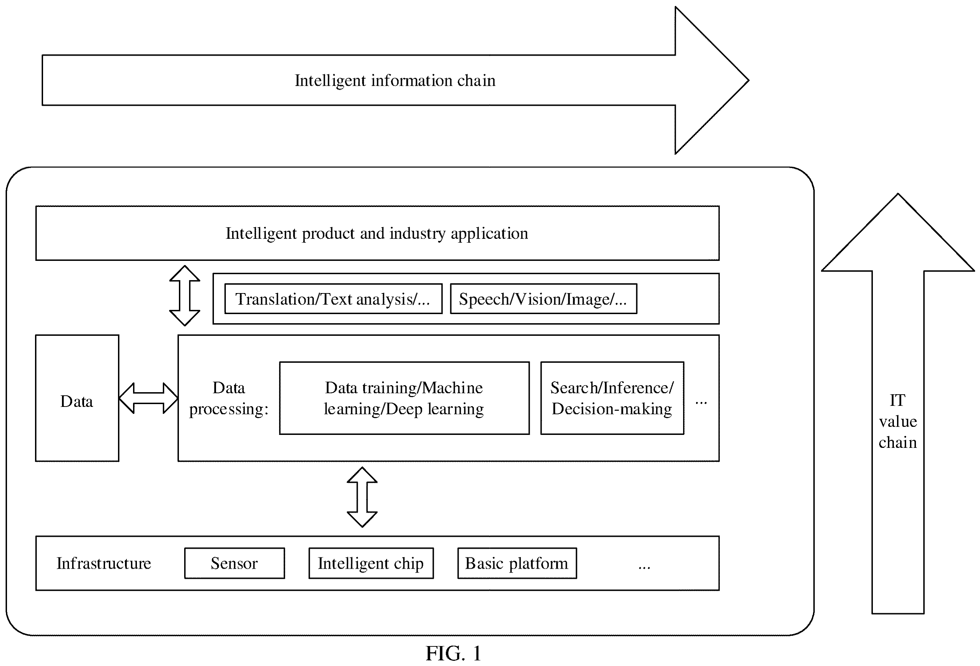

First, an overall working process of an artificial intelligence system is described. Refer to FIG. 1. FIG. 1 is a diagram of a structure of an artificial intelligence body framework. The following describes the artificial intelligence body framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects value brought by artificial intelligence to the information technology industry from underlying infrastructure and information (providing and processing technology implementation) of artificial intelligence to an industrial ecological process of a system.

(1) Infrastructure

The infrastructure provides computing capability support for an artificial intelligence system, implements communication with the external world, and implements support by using a basic platform. A sensor is used to communicate with the outside. A computing capability is provided by an intelligent chip (a hardware acceleration chip such as a CPU, an NPU, a GPU, an ASIC, or an FPGA). The basic platform includes related platform assurance and support such as a distributed computing framework and a network, and may include cloud storage and computing, an interconnection network, and the like. For example, the sensor communicates with the outside to obtain data, and the data is provided for an intelligent chip in a distributed computing system provided by the basic platform for computing.

(2) Data

Data at an upper layer of the infrastructure indicates a data source in the artificial intelligence field. The data relates to a graph, an image, a speech, and a text, further relates to internet of things data of a conventional device, and includes service data of an existing system and perception data such as force, displacement, a liquid level, a temperature, and humidity.

(3) Data processing

Data processing usually includes manners such as data training, machine learning, deep learning, search, inference, and decision-making.
Machine learning and deep learning may perform symbolic and formalized intelligent information modeling, extraction, preprocessing, training, and the like on data.
Inference is a process in which a human intelligent inference manner is simulated in a computer or an intelligent system, and machine thinking and problem resolving are performed by using formalized information according to an inference control policy. Typical functions are searching and matching.
Decision-making is a process of making a decision after intelligent information is inferred, and usually provides functions such as classification, sorting, and prediction.

(4) General-purpose capability

After data processing mentioned above is performed on data, some general-purpose capabilities may be further formed based on a data processing result. For example, the general-purpose capabilities may be an algorithm or a general system, for example, translation, text analysis, computer vision processing, speech recognition, and image recognition.

(5) Intelligent product and industry application

The intelligent product and industry application mean a product and an application of an artificial intelligence system in various fields, and are a package of an overall solution of artificial intelligence, so that decision-making for intelligent information is productized and an application is implemented. Application fields thereof mainly include an intelligent terminal, smart transportation, intelligent healthcare, autonomous driving, a smart city, and the like.
The following describes several application scenarios of this application.

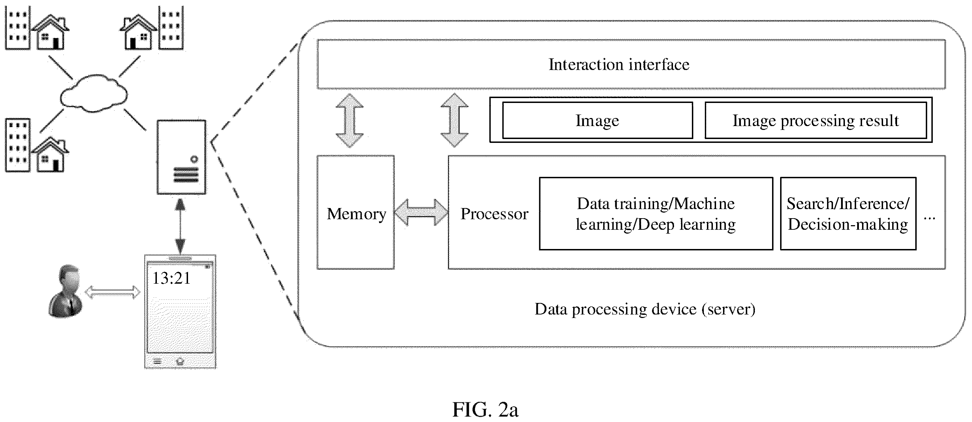

FIG. 2a is a diagram of a structure of an image processing system according to an embodiment of this application. The image processing system includes user equipment and a data processing device. The user equipment includes a smart terminal such as a mobile phone, a personal computer, or an information processing center. The user equipment is an image processing initiator, and is used as an image processing request initiator. Usually, a user initiates a request by using the user equipment.
The data processing device may be a device or a server that has a data processing function, for example, a cloud server, a network server, an application server, and a management server. The data processing device receives a text processing request from the intelligent terminal through an interaction interface, and then performs text processing in manners such as machine learning, deep learning, search, inference, and decision-making by using a data storage memory and a data processing processor. The memory in the data processing device may be a general term, and includes a local storage and a database storing historical data. The database may be in the data processing device, or may be in another network server.
In the image processing system shown in FIG. 2a, the user equipment may receive an instruction of the user. For example, the user equipment may obtain an image input/selected by the user, and then initiate a request to the data processing device, so that the data processing device executes an image processing application for the image obtained by the user equipment, to obtain a processing result corresponding to the image. For example, the user equipment may obtain an image input by the user, and then initiate an image processing request to the data processing device, so that the data processing device performs target detection processing on the image, to obtain a processing result of the image. The processing result of the image may be used to determine locations and categories of a plurality of objects in the image.

In FIG. 2a, the data processing device may perform the image processing method in embodiments of this application.

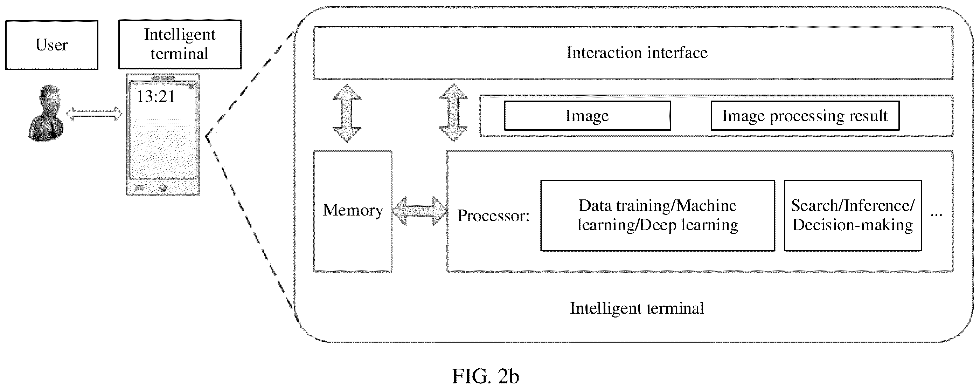

FIG. 2b is another diagram of a structure of an image processing system according to an embodiment of this application. In FIG. 2b, user equipment is directly used as a data processing device. The user equipment can directly obtain an input from a user, and the input is directly processed by hardware of the user equipment. A specific process is similar to that in FIG. 2a. For details, refer to the foregoing descriptions. Details are not described herein again.

In the image processing system shown in FIG. 2b, the user equipment may receive an instruction of the user. For example, the user equipment may obtain an image input by the user, and then perform target detection processing on the image, to obtain a processing result of the image. The processing result of the image may be used to determine locations and categories of a plurality of objects in the image.

In FIG. 2b, the user equipment may perform the image processing method in embodiments of this application.

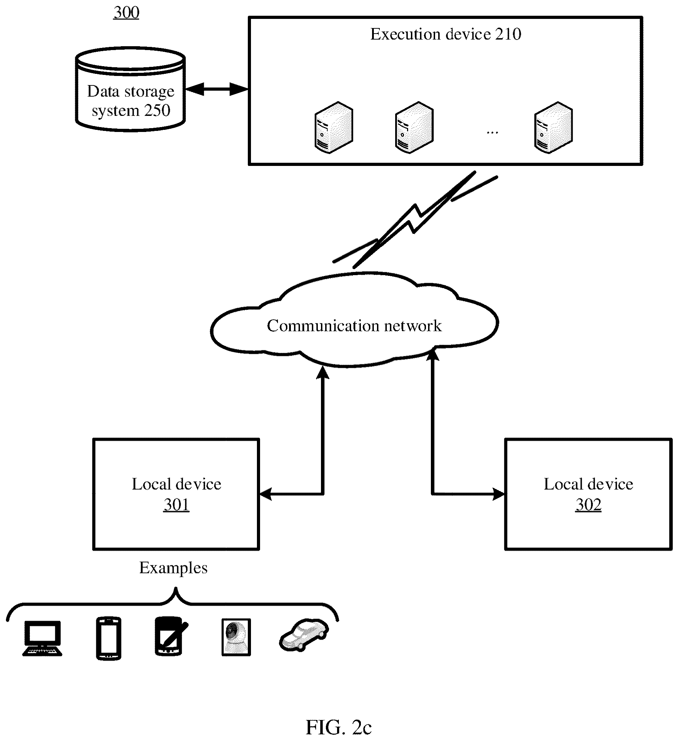

FIG. 2c is a diagram of an image processing related device according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processor in FIG. 2a and FIG. 2b may perform data training/machine learning/deep learning by using a neural network model or another model (for example, a model based on a support vector machine), and perform an image processing application on an image by using a model finally obtained through data training or learning, to obtain a corresponding processing result.

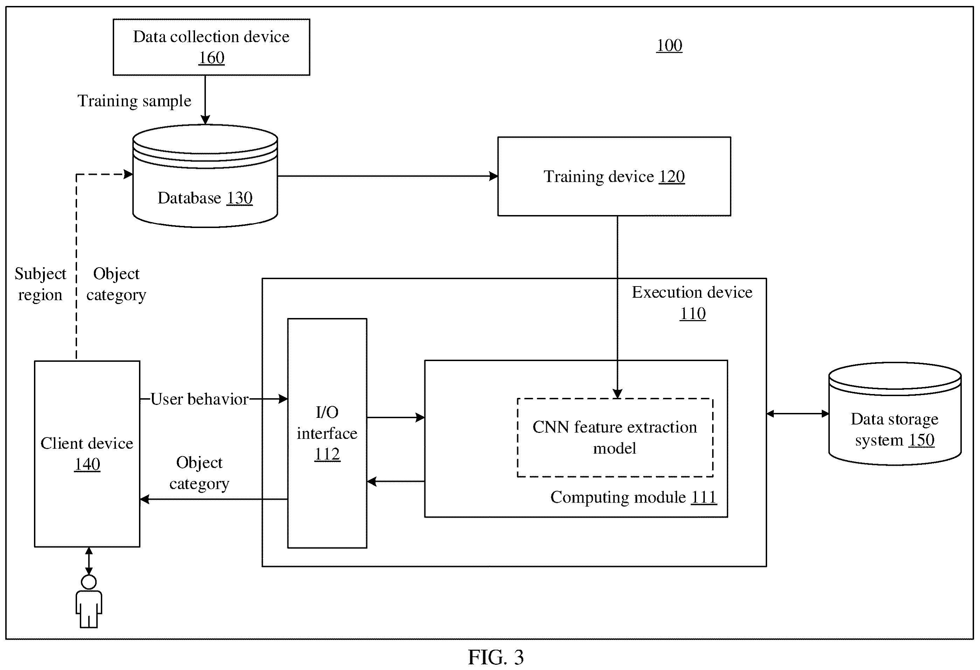

FIG. 3 is a diagram of an architecture of a system 100 according to an embodiment of this application. In FIG. 3, an execution device 110 is provided with an input/output (input/output, I/O) interface 112, to exchange data with an external device. A user may input data to the I/O interface 112 by using a client device 140. The input data in this embodiment of this application may include each to-be-scheduled task, a resource that can be invoked, and another parameter.

In a process in which the execution device 110 preprocesses the input data, or in a process in which a computing module 111 of the execution device 110 performs related processing such as calculation (for example, performs function implementation of a neural network in this application), the execution device 110 may invoke data, code, and the like in a data storage system 150 for corresponding processing, and may further store, in the data storage system 150, data, instructions, and the like that are obtained through corresponding processing.

Finally, the I/O interface 112 returns a processing result to the client device 140, to provide the processing result for the user.

It should be noted that, for different objectives or different tasks, a training device 120 may generate corresponding target models/rules based on different training data. The corresponding target models/rules may be used to achieve the foregoing objectives or complete the foregoing tasks, thereby providing a required result for the user. The training data may be stored in a database 130, and is from a training sample collected by a data collection device 160.

In the case shown in FIG. 3, the user may manually give input data, and the manual giving may be operated on an interface provided by the I/O interface 112. In another case, the client device 140 may automatically send input data to the I/O interface 112. If the client device 140 needs to obtain authorization of the user before automatically sending the input data, the user may set corresponding permission in the client device 140. The user may view, on the client device 140, a result output by the execution device 110. A specific presentation form may be a specific manner such as display, sound, or action. The client device 140 may alternatively be used as a data collection end, to collect, as new sample data, input data input into the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input into the I/O interface 112 and the output result output from the I/O interface 112 that are shown in the figure.

It should be noted that FIG. 3 is only a diagram of a system architecture according to an embodiment of this application. A location relationship between devices, components, modules, and the like shown in the figure does not constitute any limitation. For example, in FIG. 3, the data storage system 150 is an external memory relative to the execution device 110. In another case, the data storage system 150 may be alternatively disposed in the execution device 110. As shown in FIG. 3, a neural network may be obtained through training based on the training device 120.

An embodiment of this application further provides a chip. The chip includes a neural-network processing unit NPU. The chip may be disposed in the execution device 110 shown in FIG. 3, to complete computing work of the computing module 111. The chip may alternatively be disposed in the training device 120 shown in FIG. 3, to complete training work of the training device 120 and output the target model/rule.

The neural-network processing unit NPU serves as a coprocessor, and is mounted onto a host central processing unit (central processing unit, CPU) (host CPU). The host CPU assigns a task. A core part of the NPU is an operation circuit, and a controller controls the operation circuit to extract data in a memory (a weight memory or an input memory) and perform an operation.

In some implementations, the operation circuit includes a plurality of processing units (process engine, PE). In some implementations, the operation circuit is a two-dimensional systolic array. The operation circuit may alternatively be a one-dimensional systolic array or another electronic circuit that can perform mathematical operations such as multiplication and addition. In some implementations, the operation circuit is a general-purpose matrix processor.

For example, it is assumed that there is an input matrix A, a weight matrix B, and an output matrix C. The operation circuit fetches data corresponding to the matrix B from a weight memory, and buffers the data on each PE in the operation circuit. The operation circuit fetches data of the matrix A from an input memory, performs a matrix operation on the data of the matrix A and the matrix B, to obtain a partial result or a final result of the matrix, and stores the result in an accumulator (accumulator).

A vector calculation unit may perform further processing on an output of the operation circuit, such as vector multiplication, vector addition, an exponential operation, a logarithmic operation, and size comparison. For example, the vector calculation unit may be configured to perform network calculation, such as pooling (pooling), batch normalization (batch normalization), or local response normalization (local response normalization), at a non-convolutional/non-FC layer in a neural network.

In some implementations, the vector calculation unit can store a processed output vector in a unified cache. For example, the vector calculation unit may apply a non-linear function to the output of the operation circuit, for example, to a vector of an accumulated value, so as to generate an activation value. In some implementations, the vector calculation unit generates a normalized value, a combined value, or both. In some implementations, the processed output vector can be used as an activation input of the operation circuit, for example, used at a subsequent layer in the neural network.

A unified memory is configured to store input data and output data.

For weight data, a direct memory access controller (direct memory access controller, DMAC) directly transfers input data in an external memory to the input memory and/or the unified memory, stores weight data in the external memory into the weight memory, and stores data in the unified memory into the external memory.

A bus interface unit (bus interface unit, BIU) is configured to implement interaction between the host CPU, the DMAC, and an instruction fetch buffer through a bus.

The instruction fetch buffer (instruction fetch buffer) connected to the controller is configured to store instructions used by the controller.

The controller is configured to invoke the instructions buffered in the instruction fetch buffer, to control a working process of the operation accelerator.

Generally, the unified memory, the input memory, the weight memory, and the instruction fetch buffer each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes related terms and related concepts such as the neural network in embodiments of this application.

(1) Neural network

The neural network may include a neuron, and the neuron may be an arithmetic unit that uses $x_s$ and an intercept 1 as an input. An output of the arithmetic unit may be:

$$h_{W,b}\left(x\right) = f\left(W^T x\right) = f\left(\sum\nolimits_{s=1}^{n} W_s x_s + b\right) \qquad (1)$$

s=1, 2, ..., or n, n is a natural number greater than 1, $W_s$ is a weight of $x_s$, and b is a bias of the neuron. f is an activation function (activation functions) of the neuron, and is used to introduce a non-linear feature into the neural network to convert an input signal in the neuron into an output signal. The output signal of the activation function may be used as an input of a next convolutional layer. The activation function may be a sigmoid function. The neural network is a network constituted by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

Work at each layer of the neural network may be described by using a mathematical expression $y = a(Wx+b)$.

From a physical layer, work at each layer of the neural network may be understood as completing transformation from input space to output space (namely, from row space to column space of a matrix) by performing five operations on the input space (a set of input vectors). The five operations include: 1. dimension increasing/dimension reduction; 2. scaling up/scaling down; 3. rotation; 4. translation; and 5. "bending". Operations 1, 2, and 3 are completed by $Wx$, operation 4 is completed by $+b$, and operation 5 is implemented by $a()$. The word "space" is used herein for expression because a classified object is not a single thing, but a type of things. Space is a set of all individuals of this type of things. $W$ is a weight vector, and each value in the vector represents a weight value of one neuron at this layer of the neural network. The vector $W$ determines space transformation from the input space to the output space described above. In other words, a weight $W$ at each layer controls how to transform space. A purpose of training the neural network is to finally obtain a weight matrix (a weight matrix including vectors $W$ at a plurality of layers) of all layers of a trained neural network. Therefore, a training process of the neural network is essentially a manner of learning control of spatial transformation, and more specifically, learning a weight matrix.

Because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (certainly, there is usually an initialization process before the first update, that is, a parameter is preconfigured for each layer of the neural network). For example, if the predicted value of the network is large, the weight vector is adjusted to lower the predicted value until the neural network can predict the target value that is actually expected. Therefore, "how to obtain, through comparison, the difference between the predicted value and the target value" needs to be predefined. This is the loss function (loss function) or an objective function (objective function). The loss function and the objective function are important equations used to measure the difference between the predicted value and the target value. The loss function is used as an example. A larger output value (loss) of the loss function indicates a larger difference. Therefore, training of the neural network is a process of minimizing the loss.

(2) Back propagation algorithm

In a training process, a neural network may correct a value of a parameter in an initial neural network model by using an error back propagation (back propagation, BP) algorithm, so that a reconstruction error loss of the neural network model becomes increasingly small. Specifically, an input signal is forward transferred until the error loss is generated in an output, and the parameter in the initial neural network model is updated through back propagation of information about the error loss, to converge the error loss. The back propagation algorithm is an error-loss-led back propagation motion intended to obtain a parameter such as a weight matrix of an optimal neural network model.

The following describes the method provided in this application from a neural network training side and a neural network application side.

A model training method provided in embodiments of this application relates to data sequence processing, and may be specifically applied to methods such as data training, machine learning, and deep learning, to perform symbolic and formalized intelligent information modeling, extraction, preprocessing, training, and the like on training data (for example, an image and N texts in the model training method provided in embodiments of this application), so as to finally obtain a trained neural network (for example, a first model, a second model, and a third model in the model training method provided in embodiments of this application). In addition, the trained neural network may be used in a digest generation method provided in embodiments of this application, and input data (for example, an image in the image processing method provided in embodiments of this application) is input into the trained neural network, to obtain output data (for example, a first processing result of the image and a second processing result of the image in the image processing method provided in embodiments of this application). It should be noted that the model training method and the digest generation method provided in embodiments of this application are invented based on a same concept, and may also be understood as two parts of one system, or two phases of one overall procedure, for example, a model training phase and a model application phase.

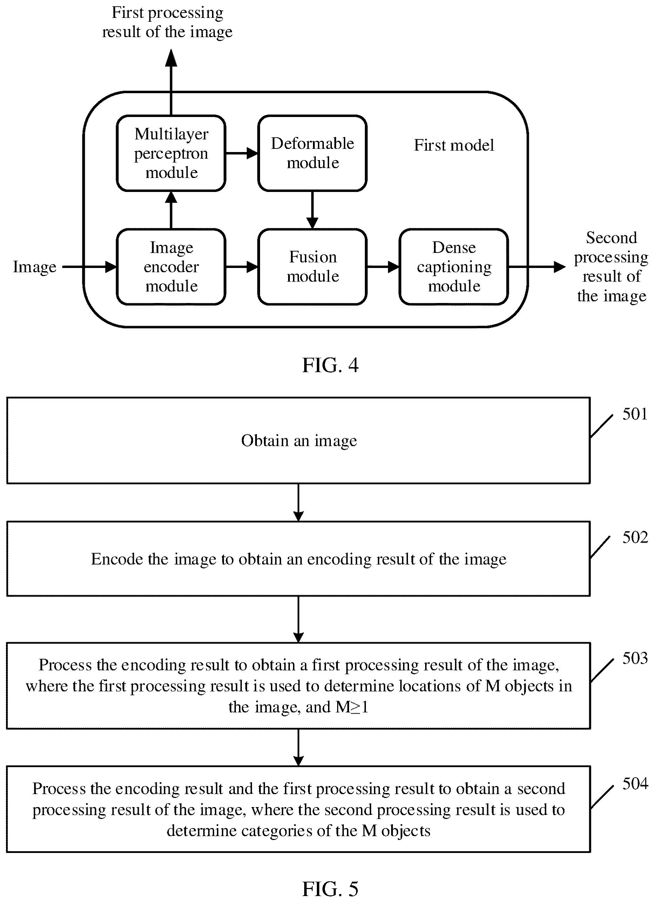

The image processing method provided in embodiments of this application may be implemented by using a first model. FIG. 4 is a diagram of a structure of the first model according to an embodiment of this application. As shown in FIG. 4, the first model includes an image encoder (image encoder) module, a multilayer perceptron (multilayer perceptron, MLP) module, a deformable (deformable) module, a fusion (cls) module, and a dense captioning (dense captioning) module. To understand a working procedure of the first model, the following describes the working procedure of the first model with reference to FIG. 5. FIG. 5 is a schematic flowchart of an image processing method according to an embodiment of this application. As shown in FIG. 5, the method includes the following steps.

501: Obtain an image.

In this embodiment, when target detection needs to be performed on an image, the image may be first obtained. It should be noted that content presented in the image usually includes a plurality of objects. After the image is obtained, the image may be input into a first model (a trained neural network model), so that the first model performs target detection-based processing on the image, to determine locations and categories of the plurality of objects in the image.

502: Encode the image to obtain an encoding result of the image.

After the image is received, the first model may encode the image, to obtain the encoding result of the image.

Specifically, the first model may obtain the encoding result of the image in the following manner.

After the image is received, an image encoder module of the first model may encode the image, to obtain first features of M objects in the image (M is a positive integer greater than or equal to 1, and the first features of the M objects may also be referred to as initial region features of the M objects). In this case, the image encoder module may use the first features of the M objects as the encoding result of the image. It should be noted that, for any two of the M objects, the two objects may be objects belonging to a same category, or may be objects belonging to different categories, and one of the M objects occupies one region in the image. In this case, the M objects may be understood as M objects in the image, or may be understood as M bounding boxes in the image.

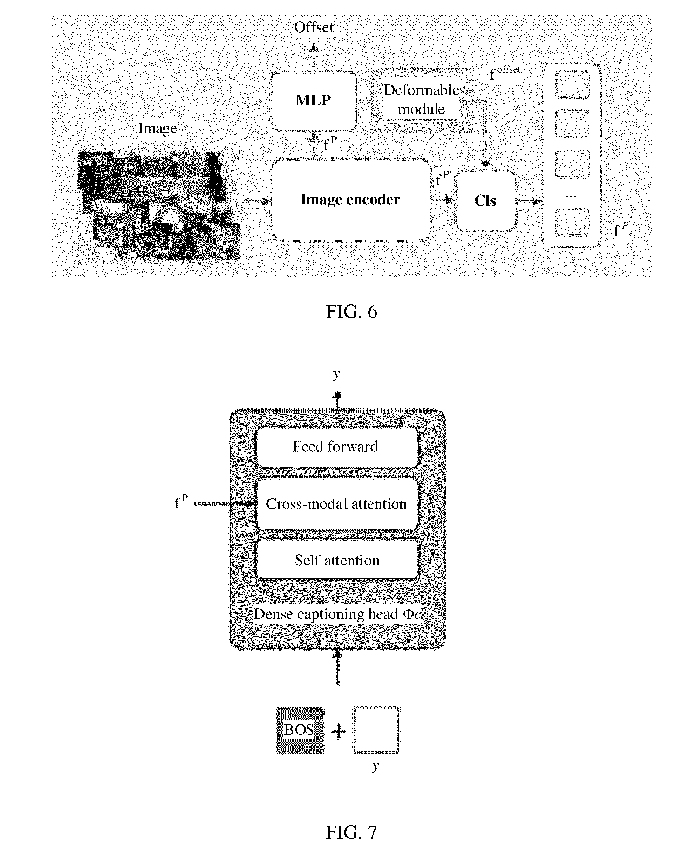

For example, as shown in FIG. 6 (FIG. 6 is another diagram of a structure of a first model according to an embodiment of this application), the first model may be referred to as an image processing model. After an image is input into the image processing model, an image encoder module in the image processing model may process the image to obtain an initial region feature $f^{P'}$, where $f^{P'}$ includes an initial feature of a first bounding box, an initial feature of a second bounding box, ..., and an initial feature of an $M^{th}$ bounding box in the image.

503: Process the encoding result to obtain a first processing result of the image, where the first processing result is used to determine locations of the M objects in the image, and $M \geq 1$.

After the encoding result of the image is obtained, the first model may process the encoding result of the image to obtain the first processing result of the image. The first processing result of the image usually includes location information of the M objects in the image. Therefore, after the first processing result of the image is output by the first model, the locations of the M objects in the image may be determined by using the first processing result of the image.

Specifically, the first model may obtain the first processing result of the image in the following manner.

After the first features of the M objects are obtained, the image encoder module may send the first features of the M objects to a multilayer perceptron module. Then, the multilayer perceptron module may perform a series of processing (for example, convolution, full connection, normalization, and channel aggregation) on the first features of the M objects, to obtain second features of the M objects (the second features of the M objects may also be referred to as location information of the M objects). In this case, the multilayer perceptron module may use the second features of the M objects as the first processing result of the image, and output the first processing result. It should be noted that, for any one of the M objects, a second feature of the object is location information of the object, and the location information of the object may be presented in a plurality of manners: (1) The location information of the object may be coordinates of a boundary point of the object in the image. For example, when the object is a bounding box, coordinates of a boundary point of the bounding box may be coordinates of four vertices of the bounding box. Therefore, a specific location of the bounding box in the image may be directly determined based on the coordinates of the four vertices of the bounding box. (2) The location information of the object may be a size of the object and coordinates of a central point of the object in the image. For example, when the object is a bounding box, a size of the bounding box may mean a height and a width of the bounding box. Therefore, a specific location of the bounding box in the image may be directly determined based on the width and the height of the bounding box and coordinates of a central point of the bounding box.

Still as in the foregoing example, after obtaining $f^{P'}$, the image encoder module may provide $f^{P'}$ for the MLP module, and the MLP module may process $f^{P'}$ to obtain location information offset, where offset includes location information of the first bounding box, location information of the second bounding box, ..., and location information of the $M^{th}$ bounding box in the image. Then, the MLP module may output offset.

504: Process the encoding result and the first processing result to obtain a second processing result of the image, where the second processing result is used to determine categories of the M objects.

After the first processing result of the image is obtained, the first model may process the encoding result of the image and the first processing result of the image to obtain the second processing result of the image. The second processing result of the image usually includes category information of the M objects in the image. Therefore, after the second processing result of the image is output by the first model, the categories of the M objects in the image may be determined by using the second processing result of the image. In this way, the locations and the categories of the M objects in the image are successfully obtained, that is, target detection for the image is completed.

Specifically, the first model may obtain the second processing result of the image in the following manner.

(1) After the second features of the M objects are obtained, the multilayer perceptron module may further send the second features of the M objects to a deformable module. Then, the deformable module may perform deformable convolution on the second features of the M objects to obtain third features of the M objects (the third features of the M objects may also be referred to as features of the location information of the M objects).

Still as in the foregoing example, after obtaining offset, the MLP module may further provide offset for the deformable module, and the deformable module may process offset to obtain a feature $f^{offset}$ of the location information, where

$f^{offset}$ includes a feature of the location information of the first bounding box, a feature of the location information of the second bounding box, ..., and a feature of the location information of the $M^{th}$ bounding box in the image.

(2) After the first features of the M objects are obtained, the image encoder module may further send the first features of the M objects to a fusion module. After the third features of the M objects are obtained, the deformable module may send the third features of the M objects to the fusion module. Then, the fusion module may fuse the first features of the M objects and the third features of the M objects to obtain fourth features of the M objects (the fourth features of the M objects may also be referred to as new region features of the M objects).

Still as in the foregoing example, after the initial region feature $f^{P'}$ is obtained, the image encoder module may provide $f^{P'}$ for the cls module. After the feature $f^{offset}$ of the location information is obtained, the deformable module may provide $f^{offset}$ for the cls module. The cls module may fuse $f^{P'}$ and $f^{offset}$ to obtain a new region feature $f^{P}$, where $f^{P}$ includes a new feature of the first bounding box, a new feature of the second bounding box, ..., and a new feature of the $M^{th}$ bounding box in the image.

(3) After the fourth features of the M objects are obtained, the fusion module may send the fourth features of the M objects to a dense captioning module. Then, the dense captioning module may perform a series of processing (for example, processing based on a self attention mechanism, processing based on a cross attention mechanism, and full connection) on the fourth features of the M objects to obtain fifth features of the M objects. In this case, the dense captioning module may use the fifth features of the M objects as the second processing result of the image, and output the second processing result. It should be noted that, for any one of the M objects, a fifth feature of the object is category information of the object, and includes probabilities that the object belongs to various categories. Therefore, a specific category of the object may be determined based on these probabilities.

Still as in the foregoing example, as shown in FIG. 7 (FIG. 7 is another diagram of a structure of a first model according to an embodiment of this application), after the new region feature $f^{P}$ is obtained, the cls module may send $f^{P}$ to the dense captioning module, and the module processes $f^{P}$ for a plurality of rounds. Specifically, in a first round, the module may sequentially perform processing based on a self attention mechanism (self attention), processing based on a cross attention mechanism (cross-modal attention), and full connection (feed forward) for a preset category BOS. A new region feature $f^{P}_1$ of the first bounding box in $f^{P}$ is added to the processing based on the cross attention mechanism, so that a probability that the first bounding box belongs to each category can be obtained. Then, a category with a highest probability is determined as a category $y_1$ of the first bounding box. In a second round, the module may sequentially perform processing based on the self attention mechanism, processing based on the cross attention mechanism, and full connection for BOS and $y_1$. A new region feature $f^{P}_2$ of the second bounding box in $f^{P}$ is added to the processing based on the cross attention mechanism, so that a probability that the second bounding box belongs to each category can be obtained. Then, a category with a highest probability is determined as a category $y_2$ of the second bounding box. The foregoing process is repeated, until a category $y_M$ of the $M^{th}$ bounding box is obtained.

In addition, the first model (that is, DetCLIPv2 in Table 1) provided in this embodiment of this application may be further compared with models provided in some related technologies (that is, models other than DetCLIPv2 in Table 1). A comparison result is shown in Table 1.

Table 1

| Model | Backbone network | Pre-training data | LVIS | |
| --- | --- | --- | --- | --- |
| | | | AP | $AP_r/AP_c/AP_f$ |
| Mask-RCNN | Swin-T | LVIS | 34.1 | 19.1/64.0/37.0 |
| ATSS | Swin-T | LVIS | 33.6 | 19.7/32.4/37.2 |
| ATSS | Swin-L | LVIS | 43.9 | 30.6/43.7/46.3 |
| MDETR | Resnet101 | GOLDG+ | 24.2 | 20.9/24.3/24.2 |
| GLIP-T(A) | Swin-T+DH+F | O365 | 18.5 | 14.2/13.9/23.4 |
| GLIP-T | Swint-T+DH+F | O365, GOLDG, CAP24M | 26.0 | 20.8/21.4/31.0 |
| GLIP-L | Swin-L+DH+F | 40Ds, O365, GOLDG, CAP24M | 37.3 | 28.2/34.3/41.5 |
| DetCLIP-T | Swin-T | O365, GOLDG, YFCC1M | 35.9 | 33.2/35.7/36.4 |
| DetCLIP-L | Swin-L | O365, GOLDG, YFCC1M | 38.6 | 36.0/38.3/39.3 |
| DetCLIPv2-T | Swin-T | O365, GOLDG, CC15M | 40.4 | 36.0/41.7/40.0 |

(continued)

| Model | Backbone network | Pre-training data | LVIS | |
|---|---|---|---|---|
| | | | AP | $AP_r/AP_c/AP_f$ |
| DetCLIPv2-L | Swin-L | O365, GOLDG, CC15M | 44.7 | 43.1/46.3/43.7 |

It should be noted that Table 1 shows zero-shot performance on an LVIS subset, $AP_r/AP_c/AP_f$ represent values of a rare category, a common category, and a frequent category respectively, and DH and F in GLIP represent a dynamic detection head and a multi-modal information deep fusion module with higher complexity.

Table 1 shows a performance result of each model on LVIS. The first model, that is, DetCLIPv2, provided in this embodiment of this application can significantly improve performance compared with a model in a related technology. For example, performance of DetCLIPv2 is much higher than that of GLIP, and performance of DetCLIPv2-T is 14.4% higher than that of GLIP-T, and is even improved by 15.2% in the rare category. In addition, it can be noted that DetCLIPv2 is more lightweight than GLIP because a dynamic head (DH) and cross-modal fusion (F) are not used.

In addition, compared with GLIP-T, DetCLIPv2-T provided in this embodiment of this application is improved by 16 times and 19 times in terms of training time and test speed respectively, as shown in Table 2.

Table 2

| Model | Data | Training time | Test speed |
|---|---|---|---|
| CLIP-T | O365+GoldG | 7.4k | 1.6 |
| DetCLIP-T | O365+GoldG+YFCC1M | 2.0k | 4.1 |
| DetCLIPv2-T | O365+GoldG+CC15M | 2.1k | 25.7 |

Further, the first model (that is, DetCLIPv2 in Table 3) provided in this embodiment of this application may be further compared with models provided in some other related technologies (that is, models other than DetCLIPv2 in Table 3). A comparison result is shown in Table 3.

Table 3

| Model | Backbone network | Pre-training data | Data volume | LVIS | |
|---|---|---|---|---|---|
| | | | | AP | $AP_r/AP_c/AP_f$ |
| DetCLIP-T(A) | Swin-T | O365 | 0.66M | 28.8 | 26.0/28.0/30.0 |
| DetCLIP-T(B) | Swin-T | O365, GOLDG | 1.43M | 34.4 | 26.9/33.9/36.3 |
| DetCLIP-T(C)* | Swin-T | O365, VG | 0.73M | 31.5 | 27.5/30.6/33.0 |
| DetCLIPv2-T* | Swin-T | O365, VG | 0.73M | 33.8 | 29.6/32.8/35.5 |

It should be noted that, in comparison with a model in a related technology, a dense captioning module is mainly added to the first model, that is, DetCLIPv2, provided in this embodiment of this application. In Table 3, impact of addition of the dense captioning module on open set detection performance is mainly explored. Table 3 shows evaluation on an LVIS minival verification set, and * indicates that a same training set (O365, VG) is used for training herein for fair comparison.

Table 2 shows zero-shot target detection performance improvement of the dense captioning module on LVIS. The backbone network Swin-T is mainly used herein to train DetCLIPv2-T on the detection data Objects365 and VG data. Because DetCLIP does not report performance of training on O365 and VG, DetCLIP and DetCLIPv2 are trained on two same datasets under a same setting for fair comparison (models with *). It can be learned from comparison between the last two rows that, after the additional dense captioning module is added, performance of DetCLIPv2-T* provided in this embodiment of this application is higher than that of DetCLIP-T(C)* in a same data scale and a same backbone network. Specifically, on the LVIS dataset, the dense captioning module improves the open set detection performance mAP by 2.3%, and improvement brought on the rare/common/frequent categories is 2.1%, 2.2%, and 2.5% respectively.

Further, the first model (that is, DetCLIPv2 in Table 4) provided in this embodiment of this application may be further compared with models provided in some other related technologies (that is, models other than DetCLIPv2 in Table 4). A comparison result is shown in Table 4.

Table 4

| Model | mAP (%) |
|---|---|
| COCG | 10.39 |
| CAG-Net | 10.51 |
| TDC | 11.90 |
| DetCLIPv2-T* | 15.44 |

Table 4 shows that target detection performance (mAP) of DetCLIPv2-T* on VG is significantly higher than that of TDC by nearly 3.5%. An important reason is that the model provided in this embodiment of this application has excellent detection performance. This is conducive to a positioning capability for a target detection task.

In this embodiment of this application, when target detection needs to be performed on an image, the image may be input into the first model. In this case, the first model may first encode the image to obtain an encoding result of the image. Then, the first model may process the encoding result of the image to obtain a first processing result of the image. Then, the first model may process the encoding result of the image and the first processing result of the image to obtain a second processing result of the image. After the first processing result and the second processing result that are output by the first model are obtained, locations of M objects in the image may be determined by using the first processing result, and categories of the M objects in the image may be determined by using the second processing result. In this way, target detection for the image is completed. In the foregoing process, an input of the first model is only the image, and no text related to the image needs to be prepared, so that image processing costs can be effectively reduced. In addition, the first model needs only to perform a series of processing on the image to complete target detection for the image, and an amount of information that needs to be processed is small. Therefore, a calculation amount of image processing can be reduced, thereby improving image processing efficiency.

Further, the first model provided in this embodiment of this application has the dense captioning module. Due to existence of the module, performance of the first model during image processing can be effectively improved, that is, the first model can accurately complete a target detection task for the image, thereby providing a better service for a user.

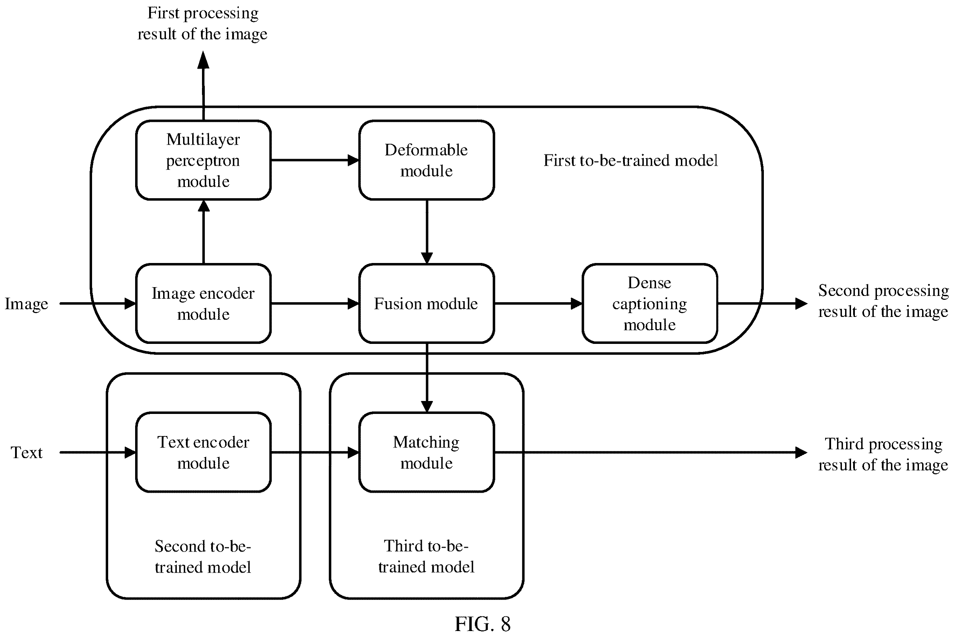

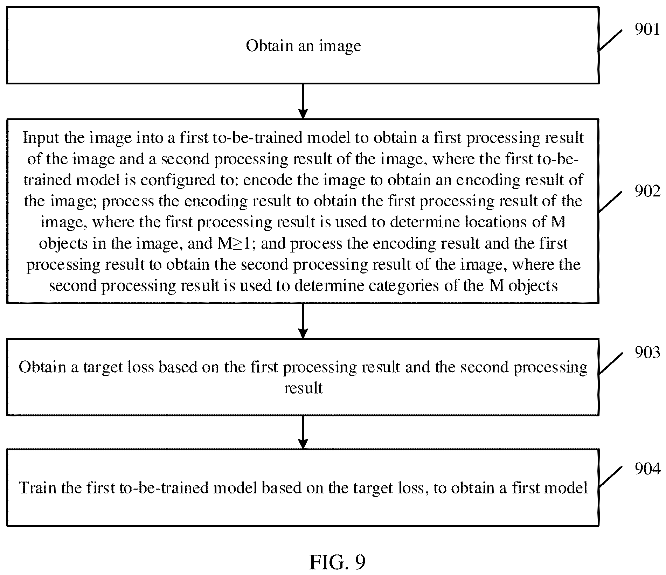

The foregoing describes in detail the image processing method provided in embodiments of this application. The following describes a model training method provided in embodiments of this application. FIG. 8 is a diagram of a structure of a joint training framework according to an embodiment of this application. As shown in FIG. 8, the framework includes a first to-be-trained model, a second to-be-trained model, and a third to-be-trained model. For an internal structure of the first to-be-trained model, refer to FIG. 4. The second to-be-trained model is a text encoder (text encoder) module, and the third to-be-trained model is a matching module. To understand a working procedure of the framework, the following describes the procedure with reference to FIG. 9. FIG. 9 is a diagram of a model training method according to an embodiment of this application. As shown in FIG. 9, the method includes the following steps.

901: Obtain an image.

In this embodiment, when a first to-be-trained model, a second to-be-trained model, and a third to-be-trained model need to be trained, a batch of training data may be first obtained. It should be noted that the training data may be obtained from three datasets. A first dataset is a detection dataset (detection dataset), a second dataset is a visual positioning dataset (grounding dataset), and a third dataset is an image text pair dataset (image text pair dataset). One piece of detection data refers to one image, the image carries a plurality of bounding boxes and a plurality of texts, one bounding box corresponds to one text (word or phrase), and a text carried in a bounding box is used to describe a category of (an object in) the bounding box. One piece of visual positioning data refers to one image and a plurality of parallel sentences (each sentence may be divided into a plurality of texts, that is, divided into a plurality of words or phrases). The image carries a plurality of bounding boxes, one bounding box corresponds to one text in such a segment of article, and a text corresponding to a bounding box is used to describe a category of (an object in) the bounding box. One piece of image text pair data refers to one image and one segment of article (the segment of text may also be divided into a plurality of texts, that is, divided into a plurality of words or phrases), and the segment of article is used to describe content in the image.

Before the batch of training data is collected from the detection dataset, the visual positioning dataset, or the image text pair dataset, raw data in the detection dataset, the visual positioning dataset, and the image text pair dataset may be preprocessed first, and then preprocessed data is collected as the training data. A preprocessing process and a collection process include the following.

(1) For any detection data in the detection dataset, the data is an image. It is assumed that the image carries M bounding boxes (that is, M objects) and M texts, and the M texts are used to describe categories of the M bounding boxes. Because some bounding boxes in the M bounding boxes are bounding boxes belonging to a same category, that is, some texts in the M texts are the same, the M texts may be first extracted from the image, and the M texts are merged to obtain K texts that are different from each other. The K texts are used to describe K categories that are different from each other, and K is less than M.

Then, Q additional texts may be selected, and the Q texts are used to describe Q additional categories that are different from each other. In this case, the K texts obtained through merging and the Q texts obtained additionally may form N texts (N=K+Q, and N is far less than M) corresponding to the image. The N texts are used to describe N categories that are different from each other, the K categories are categories that appear in the image (which may also be referred to as positive categories), and the other Q categories are categories that do not appear in the image (which may also be referred to as negative categories). In this way, the image and the N texts corresponding to the image may be collected as one piece of training data.

(2) For any visual positioning data in the visual positioning dataset, the data is an image and a plurality of sentences. It is assumed that the image carries M bounding boxes. M texts may be first extracted from the plurality of sentences, and the M texts are used to describe categories of the M bounding boxes. Because some bounding boxes in the M bounding boxes are bounding boxes belonging to a same category, that is, some texts in the M texts are the same, the M texts may be merged to obtain K texts that are different from each other. The K texts are used to describe K categories that are different from each other, and K is less than M.

Then, Q additional texts may be selected, and the Q texts are used to describe Q additional categories that are different from each other. In this case, the K texts obtained through merging and the Q texts obtained additionally may form N new texts corresponding to the image. The N texts are used to describe N categories that are different from each other, the K categories are categories that appear in the image, and the other Q categories are categories that do not appear in the image. In this way, the image and the N texts corresponding to the image may be collected as one piece of training data.

(3) For any image text pair data in the image text pair dataset, the data is an image and a segment of article. It is assumed that the image does not carry a bounding box. K texts that are different from each other may be first extracted from the segment of article, the K texts are used to describe K categories (positive categories) that are different from each other, and K is a positive integer greater than or equal to 1.

Then, Q additional texts may be selected, and the Q texts are used to describe Q additional categories (negative categories) that are different from each other. In this case, the K texts obtained through merging and the Q texts obtained additionally may form N new texts corresponding to the image. The N texts are used to describe N categories that are different from each other, the K categories are categories that appear in the image, and the other Q categories are categories that do not appear in the image. In this way, the image and the N texts corresponding to the image may be collected as one piece of training data.

Therefore, a batch of training data may be successfully collected by continuously repeating the foregoing process. The batch of training data is from the detection dataset, or is from the visual positioning dataset, or is from the image text pair dataset.

902: Input the image into the first to-be-trained model to obtain a first processing result of the image and a second processing result of the image, where the first to-be-trained model is configured to: encode the image to obtain an encoding result of the image; process the encoding result to obtain the first processing result of the image, where the first processing result is used to determine locations of M objects in the image, and M≥1; and process the encoding result and the first processing result to obtain the second processing result of the image, where the second processing result is used to determine categories of the M objects.

After a batch of training data is obtained, for any training data in the batch of training data, the training data may be input into a joint training framework, and the framework may perform the following operations.

(1) An image in the training data is input into the first to-be-trained model, and the first to-be-trained model may first encode the image to obtain an encoding result of the image. Then, the first to-be-trained model may process the encoding result of the image to obtain a first processing result of the image, where the first processing result of the image is used to determine locations of M bounding boxes in the image, and M≥1. Then, the first to-be-trained model may process the encoding result of the image and the first processing result of the image to obtain a second processing result of the image, where the second processing result of the image is used to determine categories of the M bounding boxes.

In a possible implementation, the first to-be-trained model is configured to encode the image to obtain first features of the M bounding boxes in the image, and the first features of the M bounding boxes are used as the encoding result of the image.

In a possible implementation, the first to-be-trained model is configured to perform multilayer perceptron-based processing on the first features of the M bounding boxes to obtain second features of the M bounding boxes, where the second features of the M bounding boxes are used as the first processing result of the image.

In a possible implementation, the first processing result includes coordinates of boundary points of the M bounding boxes in the image, or the first processing result includes sizes of the M bounding boxes and coordinates of central points of the M bounding boxes in the image.

In a possible implementation, the first to-be-trained model is configured to: perform deformable convolution on the second features of the M bounding boxes to obtain third features of the M bounding boxes; fuse the first features of the M bounding boxes and the third features of the M bounding boxes to obtain fourth features of the M bounding boxes; and process the fourth features of the M bounding boxes to obtain fifth features of the M bounding boxes, where the fifth features of the M bounding boxes are used as the second processing result of the image, and the processing on the fourth features includes at least one of the following: processing based on a self attention mechanism, processing based on a cross attention mechanism, and full connection.

It should be noted that for a process in which the first to-be-trained model obtains the first processing result of the image and the second processing result of the image, refer to related description parts of step 502 to step 504 in the embodiment shown in FIG. 5. Details are not described herein again.

(2) N texts corresponding to the image in the training data may be further input into the second to-be-trained model. Therefore, the second to-be-trained model may encode the N texts to obtain features of the N texts (which may also be referred to as encoding results of the N texts).

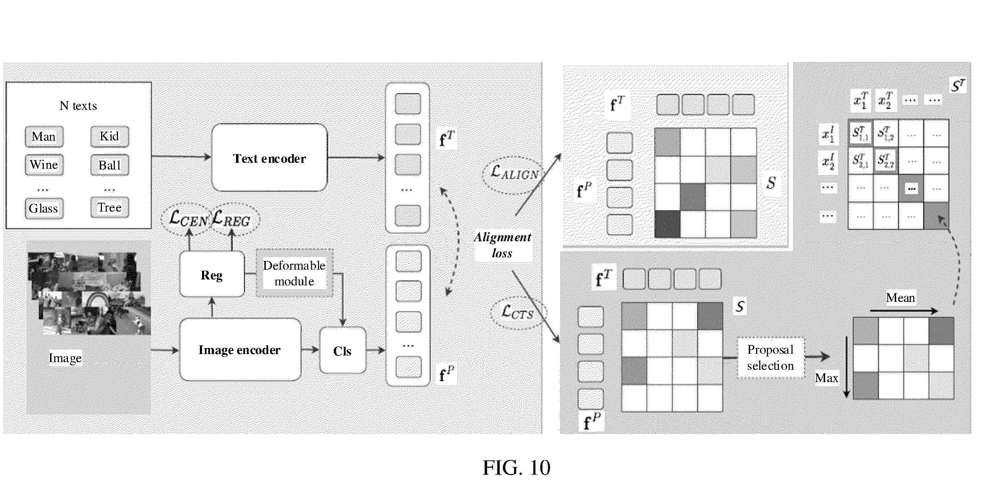

For example, as shown in FIG. 10 (FIG. 10 is another diagram of a structure of a joint training framework according to an embodiment of this application, and FIG. 10 is obtained through drawing based on FIG. 6 and FIG. 7), for an image and N texts corresponding to the image, the image may be input into an image encoder module, and the N texts may be input into a text encoder module.

In this case, the image encoder module, an MLP module, a deformable module, and a cls module may jointly process the image, to obtain a new region feature $f^P$ (for this process, refer to the example in FIG. 6, and details are not described herein again). In addition, the text encoder module may encode the N texts, to obtain a text feature $f^T$, where $f^T$ includes a feature of a first text, a feature of a second text, ..., and a feature of an $N^{th}$ text corresponding to the image.

(3) After the fourth features of the M bounding boxes are obtained, the first to-be-trained model may further send the fourth features of the M bounding boxes to the third to-be-trained model. After the features of the N texts are obtained, the second to-be-trained model may further send the features of the N texts to the third to-be-trained model. In this case, the third to-be-trained model may perform matching on the features of the N texts and the fourth features of the M bounding boxes, to obtain degrees of matching between the N texts and the M bounding boxes (for any bounding box in the M bounding boxes, degrees of matching between the bounding box and the N texts are probabilities that the bounding box belongs to N categories). In this case, the third to-be-trained model may use the degrees of matching between the N texts and the M bounding boxes as a third processing result of the image, and output the third processing result.

If the training data is from detection data or visual positioning data, no processing is performed.

If the training data is from image text pair data, the degrees of matching between the N texts and the M bounding boxes may be aggregated, to obtain degrees of matching between the N texts and the image. In this case, the degrees of matching between the N texts and the image may be used as a fourth processing result of the image.

Still as in the foregoing example, after obtaining $f^P$, the cls module may send $f^P$ to a matching module, and after obtaining $f^T$, the text encoder module may send $f^T$ to the matching module.

In this case, if the image and the N texts are from detection data/grounding data, the matching module may process $f^P$ and $f^T$ to obtain a matching degree matrix S = $f^P$Transpose($f^T$), where S includes a degree of matching between a first bounding box and the first text, a degree of matching between the first bounding box and the second text, ..., a degree of matching between a second bounding box and the first text, ..., and a degree of matching between an $M^{th}$ bounding box and the $N^{th}$ text.

If the image and the N texts are from image text pair data, after a matching degree matrix S is obtained, the matrix may be processed by using the following formula:

$$m_j = \mathrm{argmax}_k [f_j^T]^T [f_k^P] \qquad (2)$$

In the foregoing formula, $f_j^T$ is a feature of a $j^{th}$ text (j=1, ..., N), $f_k^P$ is a new feature of a $k^{th}$ bounding box (k=1, ..., M), $[f_j^T]^T[f_k^P]$ is a degree of matching between the $j^{th}$ text and the $k^{th}$ bounding box, and $m_j$ is a number of a bounding box that best matches the $j^{th}$ text. In this case, based on the formula (2), in the matching degree matrix S, a bounding box that best matches the N texts and N corresponding matching degrees may be selected.

Then, the N matching degrees may be processed by using the following formula:

$$s^T(x_i^I, x_i^T) = \frac{1}{N} \sum_{j=1}^{N} [f_j^T]^T [f_{m_j}^P] \qquad (3)$$

In the foregoing formula, $f^P_{m_j}$ is a new feature that best matches the $j^{th}$ text, $s^T\left(x^I_i, x^T_i\right)$ is a degree of matching between an $i^{th}$ image (the image) and an $i^{th}$ segment of article (an article corresponding to the image, where some of the N texts corresponding to the image are from the article) $\left(s^T\left(x^I_i, x^T_i\right)\right.$ is represented as $s^T(i, i)$ in FIG. 10), and the $i^{th}$ image and the $i^{th}$ segment of article form an $i^{th}$ image text pair data (i=1, ..., G). During training of the framework, because the batch of training data includes G pieces of image text data, another matching degree matrix $s^T$ may be obtained, where $s^T$ includes a degree of matching between a first image and a first segment of article, a degree of matching between the first image and a second segment of article, ..., a degree of matching between a second image and the first segment of article, ..., and a degree of matching between a $G^{th}$ image and a $G^{th}$ segment of article.

903: Obtain a target loss based on the first processing result and the second processing result.

If the training data is from the detection data or the visual positioning data, the first processing result of the image, the second processing result of the image, and the third processing result of the image in the training data are calculated by using a preset loss function, to obtain the target loss.

If the training data is from the image text pair data, the first processing result of the image, the second processing result of the image, and the fourth processing result of the image in the training data are calculated by using a preset loss function, to obtain the target loss.

Still as in the foregoing example, after obtaining and outputting location information offset, that is, after obtaining location information of the first bounding box, location information of the second bounding box, ..., and location information of the $M^{th}$ bounding box in the image, the MLP module may perform calculation on offset by using a preset loss function, to obtain a common centrality loss $L_{CEN}$ and a bounding box regression loss $L_{REG}$.

After obtaining and outputting a category $y_1$ of the first bounding box, a category $y_2$ of the second bounding box, ..., and a category $y_M$ of the $M^{th}$ bounding box, the dense captioning module may calculate a category generation loss $L_{CAP}$ by using the following preset loss function:

$$L_{CAP} = -\log\ p(y_t|\Phi_c(y_{\tau<t}, f^P)) \qquad (4)$$

In the foregoing formula, for any bounding box, $y_t$ is a $t^{th}$ word in a category of the bounding box, and $y_{\tau<t}$ is a first word to a $(t-1)^{th}$ word in the category of the bounding box.

If the image is from detection data/grounding data, because a real matching degree matrix S' of the image is known, that is, a real degree of matching between the first bounding box and the first text, a real degree of matching between the first bounding box and the second text, ..., a real degree of matching between the second bounding box and the first text, ..., and a real degree of matching between the $M^{th}$ bounding box and the $N^{th}$ text are known, after obtaining and outputting S, the matching module may perform calculation on S and S' by using a preset loss function, to obtain a matching loss $L_{ALIGN}$. In this case, the target loss is $L = L_{ALIGN} + \alpha L_{CEN} + \beta L_{REG} + \gamma L_{CAP}$, where weights of $\alpha$, $\beta$, and $\gamma$ are hyperparameters.

If the image is from image text pair data, a matching loss $L_{CTS}$ may be calculated by using the following preset loss function:

$$L_{CTS} = -\frac{1}{G}\log\frac{\exp(s^T(x^I_i, x^T_i)/\tau)}{\sum^G_{u=1}\exp(s^T(x^I_u, x^T_i)/\tau)} \qquad (5)$$

In this case, the target loss is $L = L_{CTS} + \alpha L_{CEN} + \beta L_{REG} + \gamma L_{CAP}$.

904: Train the first to-be-trained model based on the target loss, to obtain a first model.

After the target loss is obtained, a parameter of the first to-be-trained model, a model parameter of the second to-be-trained model, and a model parameter of the third to-be-trained model may be updated based on the target loss to obtain an updated first to-be-trained model, an updated second to-be-trained model, and an updated third to-be-trained model, a next batch of training data is obtained (that is, step 901 is performed again), and the updated first to-be-trained model, the updated second to-be-trained model, and the updated third to-be-trained model continue to be trained based on the next batch of training data (that is, step 902 to step 904 are performed again), until a model training condition is met (for example, the target loss achieves convergence), and the first model shown in FIG. 4, the second model, and the third model may be obtained.

It should be noted that an input of the first model during target detection may be only an image, and an input of a model including a remaining module other than the dense captioning module in the first model, the second model, and the third model during target detection is an image and a text corresponding to the image.

The first model obtained through training in this embodiment of this application has a specific image processing capability (target detection capability). Specifically, when target detection needs to be performed on an image, the image may be input into the first model. In this case, the first model may first encode the image to obtain an encoding result of the image. Then, the first model may process the encoding result of the image to obtain a first processing result of the image. Then, the first model may process the encoding result of the image and the first processing result of the image to obtain a second processing result of the image. After the first processing result and the second processing result that are output by the first model are obtained, locations of M objects in the image may be determined by using the first processing result, and categories of the M objects in the image may be determined by using the second processing result. In this way, target detection for the image is completed. In the foregoing process, an input of the first model is only the image, and no text related to the image needs to be prepared, so that image processing costs can be effectively reduced. In addition, the first model needs only to perform a series of processing on the image to complete target detection for the image, and an amount of information that needs to be processed is small. Therefore, a calculation amount of image processing can be reduced, thereby improving image processing efficiency.

Further, the first model provided in this embodiment of this application is obtained through training based on a joint training framework. Training data of the first model may be detection data/grounding data with a manual annotation box, or may be image text pair data without a manual annotation box. The latter may not only complete matching between a bounding box and a text, but also complete matching between an image and an article in a fine-grained image-text alignment manner, so that model training can be completed with high quality. Therefore, models (the first model, the second model, and the third model) finally obtained through training all have good performance.

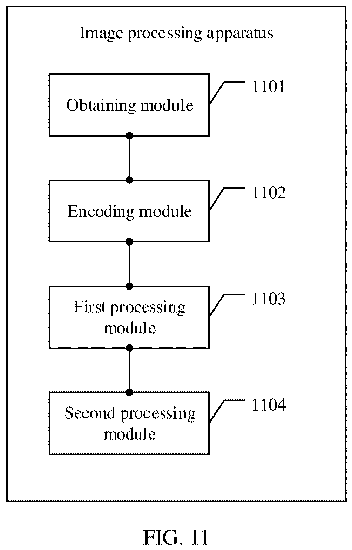

The foregoing specifically describes the image processing method and the model training method provided in embodiments of this application. The following describes an image apparatus and a model training apparatus provided in embodiments of this application. FIG. 11 is a diagram of a structure of an image processing apparatus according to an embodiment of this application. As shown in FIG. 11, the apparatus includes a first model, and the apparatus includes:

an obtaining module 1101, configured to obtain an image;
an encoding module 1102, configured to encode the image to obtain an encoding result of the image;
a first processing module 1103, configured to process the encoding result to obtain a first processing result of the image, where the first processing result is used to determine locations of M objects in the image, and M≥1; and
a second processing module 1104, configured to process the encoding result and the first processing result to obtain a second processing result of the image, where the second processing result is used to determine categories of the M objects.

In this embodiment of this application, when target detection needs to be performed on an image, the image may be input into the first model. In this case, the first model may first encode the image to obtain an encoding result of the image. Then, the first model may process the encoding result of the image to obtain a first processing result of the image. Then, the first model may process the encoding result of the image and the first processing result of the image to obtain a second processing result of the image. After the first processing result and the second processing result that are output by the first model are obtained, locations of M objects in the image may be determined by using the first processing result, and categories of the M objects in the image may be determined by using the second processing result. In this way, target detection for the image is completed. In the foregoing process, an input of the first model is only the image, and no text related to the image needs to be prepared, so that image processing costs can be effectively reduced. In addition, the first model needs only to perform a series of processing on the image to complete target detection for the image, and an amount of information that needs to be processed is small. Therefore, a calculation amount of image processing can be reduced, thereby improving image processing efficiency.

In a possible implementation, the encoding module 1102 is configured to encode the image to obtain first features of the M objects in the image, where the first features of the M objects are used as the encoding result of the image.

In a possible implementation, the first processing module 1103 is configured to perform multilayer perceptron-based processing on the first features of the M objects to obtain second features of the M objects, where the second features of the M objects are used as the first processing result of the image.

In a possible implementation, the first processing result includes coordinates of boundary points of the M objects in the image, or the first processing result includes sizes of the M objects and coordinates of central points of the M objects in the image.

In a possible implementation, the second processing module 1104 is configured to: perform deformable convolution on the second features of the M objects to obtain third features of the M objects; fuse the first features of the M objects and the third features of the M objects to obtain fourth features of the M objects; and process the fourth features of the M objects to obtain fifth features of the M objects, where the fifth features of the M objects are used as the second processing result of the image, and the processing on the fourth features includes at least one of the following: processing based on a self attention mechanism, processing based on a cross attention mechanism, and full connection.

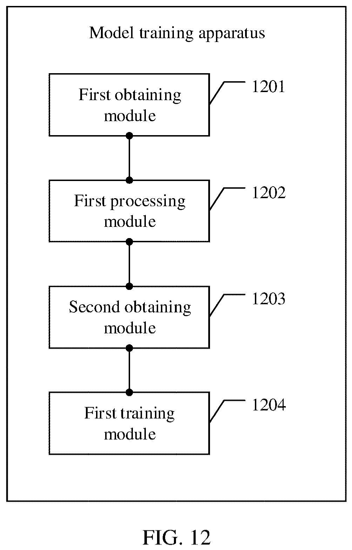

FIG. 12 is a diagram of a structure of a model training apparatus according to an embodiment of this application.

As shown in FIG. 12, the apparatus includes:

a first obtaining module 1201, configured to obtain an image;

a first processing module 1202, configured to input the image into a first to-be-trained model to obtain a first processing result of the image and a second processing result of the image, where the first to-be-trained model is configured to: encode the image to obtain an encoding result of the image; process the encoding result to obtain the first processing result of the image, where the first processing result is used to determine locations of M objects in the image, and M≥1; and process the encoding result and the first processing result to obtain the second processing result of the image, where the second processing result is used to determine categories of the M objects;

a second obtaining module 1203, configured to obtain a target loss based on the first processing result and the second processing result; and

a first training module 1204, configured to train the first to-be-trained model based on the target loss, to obtain a first model.

The first model obtained through training in this embodiment of this application has a specific image processing capability (target detection capability). Specifically, when target detection needs to be performed on an image, the image may be input into the first model. In this case, the first model may first encode the image to obtain an encoding result of the image. Then, the first model may process the encoding result of the image to obtain a first processing result of the image. Then, the first model may process the encoding result of the image and the first processing result of the image to obtain a second processing result of the image. After the first processing result and the second processing result that are output by the first model are obtained, locations of M objects in the image may be determined by using the first processing result, and categories of the M objects in the image may be determined by using the second processing result. In this way, target detection for the image is completed. In the foregoing process, an input of the first model is only the image, and no text related to the image needs to be prepared, so that image processing costs can be effectively reduced. In addition, the first model needs only to perform a series of processing on the image to complete target detection for the image, and an amount of information that needs to be processed is small. Therefore, a calculation amount of image processing can be reduced, thereby improving image processing efficiency.

In a possible implementation, the first to-be-trained model is configured to encode the image to obtain first features of the M objects in the image, where the first features of the M objects are used as the encoding result of the image.

In a possible implementation, the first to-be-trained model is configured to perform multilayer perceptron-based processing on the first features of the M objects to obtain second features of the M objects, where the second features of the M objects are used as the first processing result of the image.

In a possible implementation, the first processing result includes coordinates of boundary points of the M objects in the image, or the first processing result includes sizes of the M objects and coordinates of central points of the M objects in the image.

In a possible implementation, the first to-be-trained model is configured to: perform deformable convolution on the second features of the M objects to obtain third features of the M objects; fuse the first features of the M objects and the third features of the M objects to obtain fourth features of the M objects; and process the fourth features of the M objects to obtain fifth features of the M objects, where the fifth features of the M objects are used as the second processing result of the image, and the processing on the fourth features includes at least one of the following: processing based on a self attention mechanism, processing based on a cross attention mechanism, and full connection.

In a possible implementation, the apparatus further includes: a third obtaining module, configured to obtain N texts, where the N texts are used to describe N categories that are different from each other, and M≥N≥1; a second processing module, configured to encode the N texts by using a second to-be-trained model, to obtain features of the N texts; and a third processing module, configured to perform matching on the features of the N texts and the fourth features of the M objects by using a third to-be-trained model, to obtain degrees of matching between the N texts and the M objects, where the degrees of matching between the N texts and the M objects are used as a third processing result of the image. The second obtaining module 1203 is configured to obtain the target loss based on the first processing result, the second processing result, and the third processing result.

In a possible implementation, the apparatus further includes: a fourth processing module, configured to aggregate the degrees of matching between the N texts and the M objects to obtain degrees of matching between the N texts and the image, where the degrees of matching between the N texts and the image are used as a fourth processing result of the image. The second obtaining module 1203 is configured to obtain the target loss based on the first processing result, the second processing result, and the fourth processing result.

In a possible implementation, the apparatus further includes a second training module, configured to train the second to-be-trained model and the third to-be-trained model based on the target loss, to obtain a second model and a third model.

It should be noted that because content such as information exchange between the modules/units of the apparatus and the execution processes thereof is based on a same concept as the method embodiments of this application, technical effects brought are the same as those of the method embodiments of this application. For specific content, refer to the descriptions in the foregoing method embodiments in embodiments of this application. Details are not described herein again.

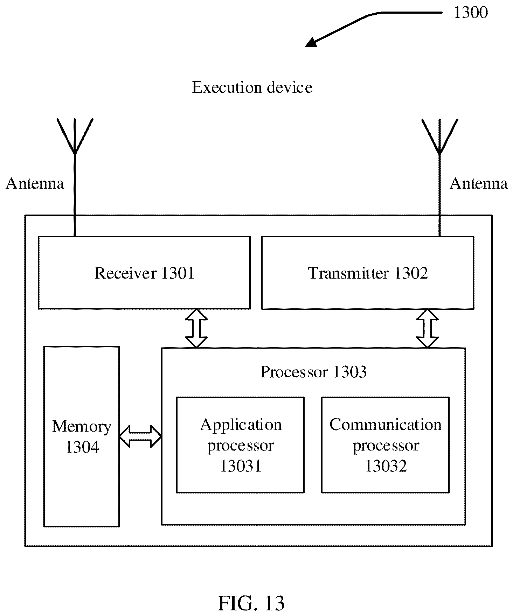

An embodiment of this application further relates to an execution device. FIG. 13 is a diagram of a structure of an execution device according to an embodiment of this application. As shown in FIG. 13, the execution device 1300 may be specifically represented as a mobile phone, a tablet, a notebook computer, an intelligent wearable device, a server, or the like. This is not limited herein. The data processing apparatus described in the embodiment corresponding to FIG. 11 may be deployed on the execution device 1300, and is configured to implement the data processing function in the embodiment corresponding to FIG. 5. Specifically, the execution device 1300 includes: a receiver 1301, a transmitter 1302, a processor 1303, and a memory 1304 (there may be one or more processors 1303 in the execution device 1300, and one processor is used as an example in FIG. 13). The processor 1303 may include an application processor 13031 and a communication processor 13032. In some embodiments of this application, the receiver 1301, the transmitter 1302, the processor 1303, and the memory 1304 may be connected through a bus or in another manner.

The memory 1304 may include a read-only memory and a random access memory, and provide instructions and data for the processor 1303. A part of the memory 1304 may further include a non-volatile random access memory (non-volatile random access memory, NVRAM). The memory 1304 stores operation instructions of the processor, an executable module or a data structure, a subset thereof, or an extended set thereof. The operation instructions may include various operation instructions used to implement various operations.

The processor 1303 controls an operation of the execution device. In specific application, components of the training device are coupled together through a bus system. In addition to a data bus, the bus system may further include a power bus, a control bus, a status signal bus, and the like. However, for clear description, various buses are referred to as the bus system in the figure.

The method disclosed in embodiments of this application may be applied to the processor 1303, or implemented by the processor 1303. The processor 1303 may be an integrated circuit chip and has a signal processing capability. In an implementation process, steps of the foregoing method may be completed by using an integrated logic circuit of hardware in the processor 1303 or instructions in a form of software. The processor 1303 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1303 may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1304. The processor 1303 reads information in the memory 1304, and completes the steps of the foregoing methods in combination with hardware of the processor.

The receiver 1301 may be configured to: receive input digit or character information, and generate a signal input related to a related setting and function control of the execution device. The transmitter 1302 may be configured to output digit or character information through a first interface. The transmitter 1302 may be further configured to send instructions to a disk group through the first interface, to modify data in the disk group. The transmitter 1302 may further include a display device like a display.

In this embodiment of this application, in a case, the processor 1303 is configured to obtain a processing result of an image by using the first model in the embodiment corresponding to FIG. 5.

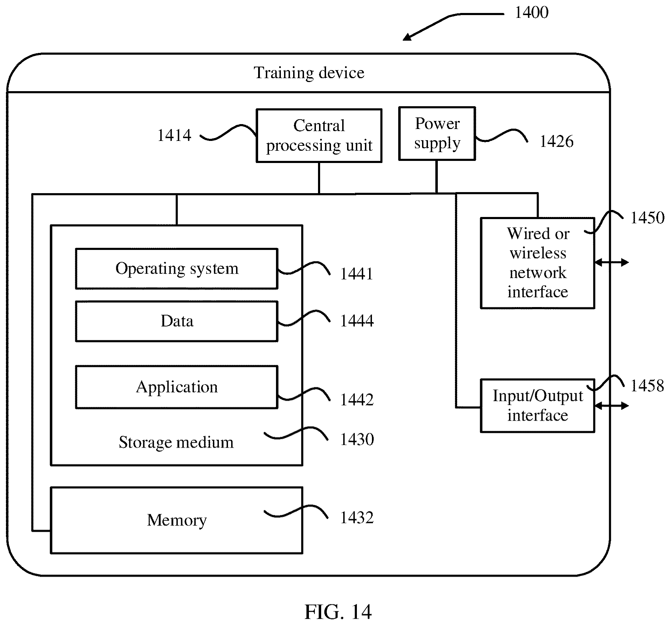

An embodiment of this application further relates to a training device. FIG. 14 is a diagram of a structure of a training device according to an embodiment of this application. As shown in FIG. 14, the training device 1400 is implemented by one or more servers, the training device 1400 may vary greatly with configuration or performance, and may include one or more central processing units (central processing units, CPU) 1414 (for example, one or more processors), a memory 1432, and one or more storage media 1430 (for example, one or more mass storage devices) that store an application 1442 or data 1444. The memory 1432 and the storage medium 1430 may be transitory storage or persistent storage. The program stored in the storage medium 1430 may include one or more modules (not shown in the figure), and each module may include a series of instruction operations for a training device. Further, the central processing unit 1414 may be configured to communicate with the storage medium 1430, and perform, on the training device 1400, the series of instruction operations in the storage medium 1430.

The training device 1400 may further include one or more power supplies 1426, one or more wired or wireless network interfaces 1450, one or more input/output interfaces 1458, or one or more operating systems 1441, such as Windows ServerTM, Mac OS XTM, UnixTM, LinuxTM, and FreeBSDTM.

Specifically, the training device may perform the model training method in the embodiment corresponding to FIG. 10.

An embodiment of this application further relates to a computer storage medium. The computer-readable storage medium stores a program used to process a signal, and when the program is run on a computer, the computer is enabled to perform steps performed by the foregoing execution device, or the computer is enabled to perform steps performed by the foregoing training device.

An embodiment of this application further relates to a computer program product. The computer program product stores instructions. When the instructions are executed by a computer, the computer is enabled to perform steps performed by the foregoing execution device, or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a cache. Alternatively, the storage unit may be a storage unit that is in the wireless access device and that is outside the chip, for example, a read-only memory (read-only memory, ROM), another type of static storage device that can store static information and instructions, or a random access memory (random access memory, RAM).

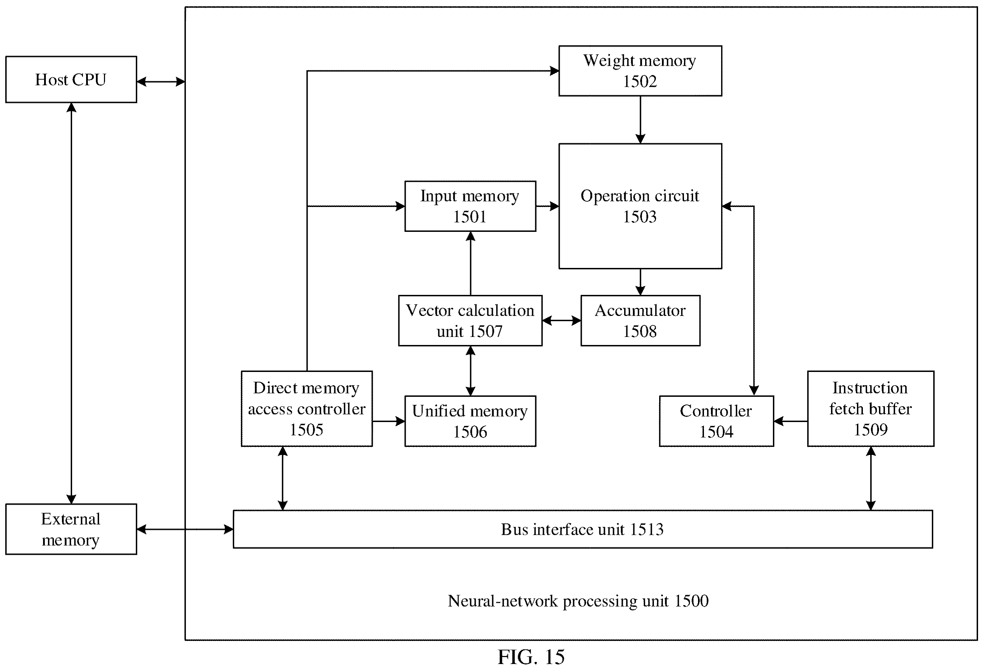

Specifically, refer to FIG. 15. FIG. 15 is a diagram of a structure of a chip according to an embodiment of this application. The chip may be represented as a neural-network processing unit NPU 1500. The NPU 1500 is mounted to a host CPU (Host CPU) as a coprocessor, and the host CPU allocates a task. A core part of the NPU is an operation circuit 1503. The operation circuit 1503 is controlled by a controller 1504 to extract matrix data in a memory and perform a multiplication operation.

In some implementations, the operation circuit 1503 includes a plurality of processing units (Process Engine, PE). In some implementations, the operation circuit 1503 is a two-dimensional systolic array. The operation circuit 1503 may alternatively be a one-dimensional systolic array or another electronic circuit that can perform mathematical operations such as multiplication and addition. In some implementations, the operation circuit 1503 is a general-purpose matrix processor.

For example, it is assumed that there is an input matrix A, a weight matrix B, and an output matrix C. The operation circuit fetches data corresponding to the matrix B from a weight memory 1502, and buffers the data on each PE in the operation circuit. The operation circuit fetches data of the matrix A from an input memory 1501, performs a matrix operation on the data of the matrix A and the matrix B, to obtain a partial result or a final result of the matrix, and stores the result in an accumulator (accumulator) 1508.

A unified memory 1506 is configured to store input data and output data. Weight data is directly transferred to the weight memory 1502 by using a direct memory access controller DMAC (Direct Memory Access Controller, DMAC) 1505. The input data is also transferred to the unified memory 1506 by using the DMAC.

A BIU is a bus interface unit, namely, a bus interface unit 1513, and is used for interaction between an AXI bus and each of the DMAC and an instruction fetch buffer (Instruction Fetch Buffer, IFB) 1509.

The bus interface unit (Bus Interface Unit, BIU for short) 1513 is used by the instruction fetch buffer 1509 to obtain instructions from an external memory, and is further used by the direct memory access controller 1505 to obtain original data of the input matrix A or the weight matrix B from the external memory.

The DMAC is mainly configured to transfer input data in the external memory DDR to the unified memory 1506, transfer weight data to the weight memory 1502, or transfer input data to the input memory 1501.

A vector calculation unit 1507 includes a plurality of operation processing units. When necessary, further processing is performed on an output of the operation circuit 1503, such as vector multiplication, vector addition, an exponential operation, a logarithmic operation, and size comparison. The vector calculation unit is mainly configured to perform network calculation at a non-convolutional/fully connected layer in a neural network, for example, batch normalization (batch normalization), pixel-level summation, and upsampling on a predicted label plane.

In some implementations, the vector calculation unit 1507 can store a processed output vector in the unified memory 1506. For example, the vector calculation unit 1507 may apply a linear function or a non-linear function to the output of the operation circuit 1503, for example, perform linear interpolation on a predicted label plane extracted at a convolutional layer, and for another example, accumulate vectors of values to generate an activation value. In some implementations, the vector calculation unit 1507 generates a normalized value, a pixel-level sum, or both. In some implementations, the processed output vector can be used as an activation input of the operation circuit 1503, for example, used at a subsequent layer in the neural network.

The instruction fetch buffer (instruction fetch buffer) 1509 connected to the controller 1504 is configured to store instructions used by the controller 1504.

The unified memory 1506, the input memory 1501, the weight memory 1502, and the instruction fetch buffer 1509 are all on-chip memories. The external memory is private for a hardware architecture of the NPU.

The processor mentioned anywhere above may be a general-purpose central processing unit, a microprocessor, an ASIC, or one or more integrated circuits configured to control the foregoing program execution.

In addition, it should be noted that the described apparatus embodiment is merely an example. The units described as separate parts may or may not be physically separate, and parts displayed as units may or may not be physical units, may be located in one place, or may be distributed on a plurality of network units. Some or all of the modules may be selected according to an actual requirement to achieve the objectives of the solutions in the embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by using software in addition to necessary universal hardware, or by using dedicated hardware, including a dedicated integrated circuit, a dedicated CPU, a dedicated memory, a dedicated component, and the like. Generally, any function that is performed by a computer program can be easily implemented by using corresponding hardware. Moreover, a specific hardware structure used to implement a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. An image processing method, wherein the method is implemented by using a first model, and the method comprises:

    obtaining an image;
    encoding the image to obtain an encoding result of the image;
    processing the encoding result to obtain a first processing result of the image, wherein the first processing result is used to determine locations of M objects in the image, and M≥1; and
    processing the encoding result and the first processing result to obtain a second processing result of the image, wherein the second processing result is used to determine categories of the M objects.

2. The method according to claim 1, wherein encoding the image to obtain the encoding result of the image comprises: encoding the image to obtain first features of the M objects in the image, wherein the first features of the M objects are used as the encoding result of the image.

3. The method according to claim 1 or 2, wherein processing the encoding result to obtain the first processing result of the image comprises:

performing multilayer perceptron-based processing on the first features of the M objects to obtain second features of the M objects, wherein the second features of the M objects are used as the first processing result of the image.

4. The method according to any one of claims 1 to 3, wherein the first processing result comprises coordinates of boundary points of the M objects in the image, or the first processing result comprises sizes of the M objects and coordinates of central points of the M objects in the image.

5. The method according to any one of claims 1 to 4, wherein processing the encoding result and the first processing result to obtain the second processing result of the image comprises:

performing deformable convolution on the second features of the M objects to obtain third features of the M objects;

fusing the first features of the M objects and the third features of the M objects to obtain fourth features of the M objects; and

processing the fourth features of the M objects to obtain fifth features of the M objects, wherein the fifth features of the M objects are used as the second processing result of the image, and the processing on the fourth features comprises at least one of the following: processing based on a self attention mechanism, processing based on a cross attention mechanism, and full connection.

6. A model training method, wherein the method comprises:

obtaining an image;

inputting the image into a first to-be-trained model to obtain a first processing result of the image and a second processing result of the image, wherein the first to-be-trained model is configured to: encode the image to obtain an encoding result of the image; process the encoding result to obtain the first processing result of the image, wherein the first processing result is used to determine locations of M objects in the image, and $M \geq 1$; and process the encoding result and the first processing result to obtain the second processing result of the image, wherein the second processing result is used to determine categories of the M objects;

obtaining a target loss based on the first processing result and the second processing result; and

training the first to-be-trained model based on the target loss, to obtain a first model.

7. The method according to claim 6, wherein the first to-be-trained model is configured to encode the image to obtain first features of the M objects in the image, wherein the first features of the M objects are used as the encoding result of the image.

8. The method according to claim 6 or 7, wherein the first to-be-trained model is configured to perform multilayer perceptron-based processing on the first features of the M objects to obtain second features of the M objects, wherein the second features of the M objects are used as the first processing result of the image.

9. The method according to any one of claims 6 to 8, wherein the first processing result comprises coordinates of boundary points of the M objects in the image, or the first processing result comprises sizes of the M objects and coordinates of central points of the M objects in the image.

10. The method according to any one of claims 6 to 9, wherein the first to-be-trained model is configured to:

perform deformable convolution on the second features of the M objects to obtain third features of the M objects;

fuse the first features of the M objects and the third features of the M objects to obtain fourth features of the M objects; and

process the fourth features of the M objects to obtain fifth features of the M objects, wherein the fifth features of the M objects are used as the second processing result of the image, and the processing on the fourth features comprises at least one of the following: processing based on a self attention mechanism, processing based on a cross attention mechanism, and full connection.

11. The method according to any one of claims 6 to 10, wherein the method further comprises:

obtaining N texts, wherein the N texts are used to describe N categories that are different from each other, and $M \geq N \geq 1$;

encoding the N texts by using a second to-be-trained model, to obtain features of the N texts; and

performing matching on the features of the N texts and the fourth features of the M objects by using a third to-be-trained model, to obtain degrees of matching between the N texts and the M objects, wherein the degrees of matching between the N texts and the M objects are used as a third processing result of the image; and

obtaining the target loss based on the first processing result and the second processing result comprises: obtaining the target loss based on the first processing result, the second processing result, and the third processing result.

12. The method according to claim 11, wherein the method further comprises:

aggregating the degrees of matching between the N texts and the M objects to obtain degrees of matching between the N texts and the image, wherein the degrees of matching between the N texts and the image are used as a fourth processing result of the image; and

obtaining the target loss based on the first processing result and the second processing result comprises: obtaining the target loss based on the first processing result, the second processing result, and the fourth processing result.

13. The method according to claim 11 or 12, wherein the method further comprises:
training the second to-be-trained model and the third to-be-trained model based on the target loss, to obtain a second model and a third model.

14. An image processing apparatus, wherein the apparatus comprises a first model, and the apparatus comprises:

an obtaining module, configured to obtain an image;

an encoding module, configured to encode the image to obtain an encoding result of the image;

a first processing module, configured to process the encoding result to obtain a first processing result of the image, wherein the first processing result is used to determine locations of M objects in the image, and M≥1; and

a second processing module, configured to process the encoding result and the first processing result to obtain a second processing result of the image, wherein the second processing result is used to determine categories of the M objects.

15. A model training apparatus, wherein the apparatus comprises:

a first obtaining module, configured to obtain an image;

a first processing module, configured to input the image into a first to-be-trained model to obtain a first processing result of the image and a second processing result of the image, wherein the first to-be-trained model is configured to: encode the image to obtain an encoding result of the image; process the encoding result to obtain the first processing result of the image, wherein the first processing result is used to determine locations of M objects in the image, and M≥1; and process the encoding result and the first processing result to obtain the second processing result of the image, wherein the second processing result is used to determine categories of the M objects;

a second obtaining module, configured to obtain a target loss based on the first processing result and the second processing result; and

a first training module, configured to train the first to-be-trained model based on the target loss, to obtain a first model.

16. An image processing apparatus, wherein the apparatus comprises a memory and a processor, the memory stores code, the processor is configured to execute the code, and when the code is executed, the image processing apparatus performs the method according to any one of claims 1 to 13.

17. A computer storage medium, wherein the computer storage medium stores one or more instructions, and when the instructions are executed by one or more computers, the one or more computers are enabled to implement the method according to any one of claims 1 to 13.

18. A computer program product, wherein the computer program product stores instructions, and when the instructions are executed by a computer, the computer is enabled to implement the method according to any one of claims 1 to 13.

Intelligent information chain

Intelligent product and industry application

| Translation/Text analysis/... | Speech/Vision/Image/... |

Data

Data processing:

| Data training/Machine learning/Deep learning | Search/Inference/ Decision-making | ... |

| Infrastructure | Sensor | Intelligent chip | Basic platform | ... |

IT value chain

FIG. 1

FIG. 2a

FIG. 2b

EP 4 664 420 A1

FIG. 2c

Data collection device
160

Training sample

Database 130

Training device 120

Subject region | Object category

Execution device
110

User behavior

Client device
140

Object category

I/O interface
112

CNN feature extraction model

Computing module 111

Data storage system 150

100

FIG. 3

First processing
result of the image

↑

First model

Multilayer
perceptron
module → Deformable
module

↑

Image
encoder
module → Fusion
module → Dense
captioning
module

Image →

↓ Second
processing
result of
the image

FIG. 4

| Obtain an image | 501 |

↓

| Encode the image to obtain an encoding result of the image | 502 |

↓

| Process the encoding result to obtain a first processing result of the image, where the first processing result is used to determine locations of M objects in the image, and M≥1 | 503 |

↓

| Process the encoding result and the first processing result to obtain a second processing result of the image, where the second processing result is used to determine categories of the M objects | 504 |

FIG. 5

FIG. 6

FIG. 7

First processing
result of the image

First to-be-trained model

Multilayer
perceptron
module

Deformable
module

Image → Image encoder
module

Fusion module

Dense
captioning
module

→ Second processing
result of the image

Text → Text encoder
module

Matching
module

→ Third processing
result of the image

Second to-be-
trained model

Third to-be-
trained model

FIG. 8

Obtain an image                                                                    901

Input the image into a first to-be-trained model to obtain a first processing result of the image and a second processing result of the image, where the first to-be-trained model is configured to: encode the image to obtain an encoding result of the image; process the encoding result to obtain the first processing result of the image, where the first processing result is used to determine locations of M objects in the image, and M≥1; and process the encoding result and the first processing result to obtain the second processing result of the image, where the second processing result is used to determine categories of the M objects                                                                    902

Obtain a target loss based on the first processing result and the second processing result                                                                    903

Train the first to-be-trained model based on the target loss, to obtain a first model                                                                    904

FIG. 9

FIG. 10

Image processing apparatus

Obtaining module — 1101

Encoding module — 1102

First processing module — 1103

Second processing module — 1104

FIG. 11

FIG. 12

1300

Execution device

Antenna

Antenna

| Receiver 1301 | Transmitter 1302 |
|---|---|

Processor 1303

| Memory 1304 | Application processor 13031 | Communication processor 13032 |
|---|---|---|

FIG. 13

1400

Training device

1414 — Central processing unit    Power supply — 1426

Operating system — 1441

Data — 1444

Application — 1442

Storage medium — 1430

Memory — 1432

Wired or wireless network interface — 1450

Input/Output interface — 1458

FIG. 14

Host CPU

External
memory

Weight memory
1502

Input memory
1501

Operation circuit
1503

Vector calculation
unit 1507

Accumulator
1508

Direct memory
access controller
1505

Unified memory
1506

Controller
1504

Instruction
fetch buffer
1509

Bus interface unit 1513

Neural-network processing unit 1500

FIG. 15

## INTERNATIONAL SEARCH REPORT

| International application No. |
| --- |
| **PCT/CN2024/078888** |

| A. | CLASSIFICATION OF SUBJECT MATTER |
| --- | --- |

G06V10/82(2022.01)i

According to International Patent Classification (IPC) or to both national classification and IPC

| B. | FIELDS SEARCHED |
| --- | --- |

Minimum documentation searched (classification system followed by classification symbols)

IPC:GO6V,G06N,G06K

Documentation searched other than minimum documentation to the extent that such documents are included in the fields searched

Electronic data base consulted during the international search (name of data base and, where practicable, search terms used)

CNTXT, ENTXTC, VEN, CNKI, IEEE: 图像, 目标, 识别, 检测, 位置, 候选框, 框, 分类, 类别, 多层感知机, 可变形卷积, 编码, image, object, categories, position, classif+, recogni+, detection, MLP, transformer, encod+, deform+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116343004 A (HUAWEI TECHNOLOGIES CO., LTD.) 27 June 2023 (2023-06-27) claims 1-18 | 1-18 |
| X | CN 113807361 A (HUAWEI TECHNOLOGIES CO., LTD.) 17 December 2021 (2021-12-17) description, paragraphs 114-233, and figures 2-14 | 1-4, 6-9, 14-18 |
| A | CN 114663670 A (TENCENT TECHNOLOGY (SHANGHAI) CO., LTD.) 24 June 2022 (2022-06-24) entire document | 1-18 |
| A | WO 2022217434 A1 (HUAWEI TECHNOLOGIES CO., LTD.) 20 October 2022 (2022-10-20) entire document | 1-18 |
| A | CN 113673489 A (ZHEJIANG LAB) 19 November 2021 (2021-11-19) entire document | 1-18 |
| A | WO 2023274052 A1 (HUAWEI TECHNOLOGY CO.,LTD.) 05 January 2023 (2023-01-05) entire document | 1-18 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 May 2024** | **17 May 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/078888**

| Patent document cited in search report | | | Publication date (day/month/year) | Patent family member(s) | | Publication date (day/month/year) |
|---|---|---|---|---|---|---|
| CN | 116343004 | A | 27 June 2023 | None | | |
| CN | 113807361 | A | 17 December 2021 | None | | |
| CN | 114663670 | A | 24 June 2022 | None | | |
| WO | 2022217434 | A1 | 20 October 2022 | None | | |
| CN | 113673489 | A | 19 November 2021 | None | | |
| WO | 2023274052 | A1 | 05 January 2023 | EP 4350575 | A1 | 10 April 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310230254